# EUROPÄISCHE PATENTANMELDUNG

(11) **EP 4 678 837 A1**
(43) Veröffentlichungstag der Anmeldung: **14.01.2026**
(21) Anmeldenummer: 25188520.8
(22) Anmeldetag: 09.07.2025
(51) Int. Cl.: E04B 1/26, F16B 5/00

(54) **WAND-, DECKEN-, FASSADEN- ODER DACHELEMENTVERBINDUNG**

(30) Priorität: 10.07.2024 DE 102024119649
(71) Anmelder: Adolf Würth GmbH & Co. KG, 74653 Künzelsau (DE)
(72) Erfinder: Buhl, Stefan, 87538 Obermaiselstein (DE); Cera, Udo, 74523 Schwäbisch Hall (DE)
(74) Vertreter: Dilg, Haeusler, Schindelmann Patentanwaltsgesellschaft mbH

(57) **Zusammenfassung**

Anordnung für eine Wand-, Decken-, Fassaden- oder Dachelementverbindung zur Verbindung stab-, balken- oder plattenförmiger Holzbauteile (1, 2), aufweisend einen Zapfen (3) mit mindestens einem Einführloch (30), und eine lösbare Verbindung (15), die lösbar durch das mindestens eine Einführloch (30) des Zapfens (3) hindurchführbar und in ein erstes Holzbauteil (1) einführbar ist, wobei der Zapfen (3) ausgebildet ist, mittels der lösbaren Verbindung (15) an einer Anschlussfläche (10) an dem ersten Holzbauteil (1) befestigt zu werden, wobei der Zapfen (3) mit einer sich von der Anschlussfläche (10) in Richtung einer gegenüberliegenden Stirnfläche (11) zum Anschluss an ein zweites Holzbauteil (2) erweiternden Außenkontur ausgebildet ist, wobei der Zapfen (3) zur Einführung in einen Einführungsbereich (5) einer am zweiten Holzbauteil (2) angeordneten Tasche oder Nut (4) ausgebildet ist, und wobei der Zapfen (3) zur Halterung in einem Haltebereich (6) der Tasche oder Nut (4) mit einer an die Außenkontur des Zapfens (3) angepassten, sich nach innen erweiternden Innenkontur ausgebildet ist.

## Beschreibung

Die Erfindung betrifft eine Anordnung für eine Wand-, Decken-, Fassaden- oder Dachelementverbindung zur Verbindung stab-, balken- oder plattenförmiger Holzbauteile aufweisend einen Zapfen und eine lösbare Verbindung, und eine Wand-, Decken-, Fassaden- oder Dachelementverbindung.

Zur Verbindung von Wand-, Decken- oder Dachelementen werden im Holzbau vielfach spezielle Metallverbinder oder klassische Holzverbindungen mit zum Beispiel Finger- oder Schwalbenschwanzverzinkungen ohne metallische Verbindungselemente eingesetzt. Bei den üblichen Schwalbenschwanzverbindungen wird in der Regel an dem einen Bauteil ein Zapfen mit einer speziell geformten Außenkontur angefräst oder ausgeschnitten. An dem zweiten Bauteil wird eine dazugehörige Nut mit einer zu der Außenkontur des Zapfens korrespondierenden Innenkontur hergestellt. Die seitlichen Außenflächen des Zapfens und die dazu korrespondierenden inneren Seitenflächen der Nut sind in der Regel abgeschrägt, so dass der Zapfen und die Nut im Querschnitt die Form eines Schwalbenschwanzes aufweisen. Dadurch kann eine derartige Verbindung nicht nur Querkräfte, sondern auch Zugkräfte übertragen. Allerdings ist die Herstellung einer derartigen Verbindung mit einem entsprechenden hohen Fertigungsaufwand verbunden. Außerdem müsste bei der Verbindung großflächiger Bauelemente relativ viel Material zur Herstellung der Zapfen entfernt werden, damit der Zapfen übrigbleibt. Auch die Metallverbinder sind in der Regel aufwändig in der Herstellung und erfordern eine genaue Vormontage. Außerdem ist bei der Wandmontage das Einfahren mit solchen Metallverbindern relativ schwer, da der Spielraum sehr gering ist.

Es ist eine Aufgabe der vorliegenden Erfindung, eine Wand-, Decken-, Fassaden- oder Dachelementverbindung der eingangs genannten Art zu schaffen, die eine einfache und wenig aufwendige Verbindung auch großflächiger Bauelemente ermöglicht.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist eine Anordnung für eine Wand-, Decken-, Fassaden- oder Dachelementverbindung zur Verbindung stab-, balken- oder plattenförmiger Holzbauteile, bereitgestellt, aufweisend einen Zapfen mit mindestens einem Einführloch (zum Beispiel mindestens ein Durchgangsloch), und eine lösbare Verbindung, die lösbar durch das mindestens eine Einführloch des Zapfens hindurchführbar und in ein erstes Holzbauteil einführbar ist, wobei der Zapfen ausgebildet ist, mittels der lösbaren Verbindung an einer Anschlussfläche an dem ersten Holzbauteil befestigt zu werden, wobei der Zapfen mit einer sich von der Anschlussfläche in Richtung einer gegenüberliegenden Stirnfläche zum Anschluss an ein zweites Holzbauteil erweiternden Außenkontur ausgebildet ist, wobei der Zapfen zur Einführung in einen Einführungsbereich einer am zweiten Holzbauteil angeordneten Tasche oder Nut ausgebildet ist, und wobei der Zapfen zur Halterung in einem Haltebereich der Tasche oder Nut mit einer an die Außenkontur des Zapfens angepassten, sich nach innen erweiternden Innenkontur ausgebildet ist. Besagte Tasche oder Nut kann eine einzuhängende Vertiefung bilden.

Gemäß einem anderen Ausführungsbeispiel der vorliegenden Erfindung ist eine Wand-, Decken-, Fassaden- oder Dachelementverbindung bereitgestellt, aufweisend eine Anordnung mit den oben beschriebenen Merkmalen, ein erstes Holzbauteil, an dem die Anschlussfläche des Zapfens mittels der lösbaren Verbindung befestigt oder befestigbar ist, ein zweites Holzbauteil, an das der Zapfen angeschlossen oder anschließbar ist, so dass das zweite Holzbauteil der Stirnfläche des Zapfens zugewandt ist, wobei das zweite Holzbauteil eine Tasche oder Nut mit einem Einführungsbereich zum Einführen des Zapfens und einem Haltebereich zum Haltern des Zapfens aufweist, wobei der Haltebereich mit einer an die Außenkontur des Zapfens angepassten, sich nach innen erweiternden Innenkontur ausgebildet ist.

Gemäß einem exemplarischen Ausführungsbeispiel der Erfindung ist eine Wand-, Decken-, Fassaden- oder Dachelementverbindung geschaffen, umfassend einen an einem ersten Holzbauteil angeordneten Zapfen mit einer sich in Richtung des zweiten Bauelements erweiternden Außenkontur und eine an einem zweiten Holzbauteil vorgesehene Tasche oder Nut, die einen Einführungsbereich zum Einführen des Zapfens und einen Haltebereich mit einer an die Außenkontur des Zapfens angepassten, sich nach innen erweiternden Innenkontur zur Halterung des Zapfens aufweist. Der als separates Bauteil ausgebildete Zapfen ist über eine zum Beispiel als Schraub- oder Stiftverbindung ausgeführte lösbare Verbindung an dem ersten Holzbauteil befestigt. Die zu dem Zapfen gehörende Tasche oder Nut am zweiten Holzbauteil kann zum Beispiel direkt in das zweite Holzbauteil eingefräst sein oder als Adapterteil am zweiten Holzbauteil angebracht sein. Über die lösbare Verbindung können die Zapfen zum Beispiel einfach und schnell an beliebigen Stellen montiert werden. Es sind keine aufwändigen Fertigungs- oder Montageschritte erforderlich. So können zum Beispiel auch an den Stirn- oder Seitenflächen großer Wandbauteile in einfacher Weise entsprechende Zapfen an den gewünschten Stellen befestigt werden. Dadurch kann die Montage großformatiger Bauelemente, wie zum Beispiel aus Holz gefertigte Wand-, Decken- oder Dachelemente, erheblich vereinfacht werden. Gegenüber bekannten Metallverbindern bietet die erfindungsgemäße Wand-, Decken-, Fassaden- oder Dachelementverbindung außerdem eine verbesserte Bewegungsfreiheit. Beim Ansetzen der Verbindung können die Bauteile noch einfacher ausgerichtet und justiert werden, wodurch die Montage erheblich erleichtert wird. Sowohl der Zapfen als auch die entsprechende Tasche oder Nut können einfach und wenig aufwendig gefertigt werden und ermöglichen eine zuverlässige Verbindung mit einer erheblichen Zeitersparnis bei der Montage.

Im Weiteren werden zusätzliche Ausführungsbeispiele der Anordnung und der Wand-, Decken-, Fassaden- oder Dachelementverbindung beschrieben.

Ausführungsbeispiele der Erfindung stellen eine Anordnung zur Verbindung von beispielsweise Wand-, Decken-, Fassaden- oder Dachelementen bereit. Die zu verbindenden Elemente können beispielsweise stab-, balken- oder plattenförmig ausgebildet sein. Auch können diese Anordnungen zur Verbindung komplett vorgefertigter mehrteiliger zusammengesetzter Holzbauteile in Form von kompletten Raumelementen oder vorgehängten Fassadenelementen verwendet werden. Die Anordnung kann einen ein- oder mehrteiligen Zapfen und eine lösbare Verbindung zum Anschließen des Zapfens aufweisen. Auch vorgehängte Fassadenelemente oder Distanzhölzer von kubusförmigen Fertigelementen können gemäß exemplarischen Ausführungsbeispielen verbunden werden.

Gemäß Ausführungsbeispielen der Erfindung ist eine einfache und wenig aufwendige Verbindung insbesondere großflächiger Bauelemente ermöglicht. Aufgrund der im Vergleich zum Kleinmöbelbau verwendeten anders dimensionierten Verbinder können angesichts vorliegender Materialien und Produktdimensionierungen während der Montage auftretende Kräfte aufgenommen und gegebenenfalls im montierten Zustand auftretende Kräfte statisch abgetragen werden.

Gemäß einem Ausführungsbeispiel kann eine schalldämmende Schicht zwischen dem ersten Holzbauteil und dem Zapfen und/oder zwischen dem Zapfen und dem zweiten Holzbauteil vorgesehen werden. Die schalldämmende Schicht kann an dem ersten Holzbauteil, an dem Zapfen und/oder an dem zweiten Holzbauteil angebracht sein oder als separates Einlegeteil ausgebildet werden. Die Aufbringung einer Zwischenschicht kann vorgenommen werden, um eine Schallentkopplung zu erreichen. Beispielsweise kann eine schalldämmende Schicht zwischen die Bauteile eingelegt werden. Es ist auch möglich, die Seitenkante des Verbinderzapfens damit zu überkleben.

Gemäß einem Ausführungsbeispiel kann an der Anschlussfläche des Zapfens mindestens eine Erhebung zum formschlüssigen Eingriff in mindestens eine entsprechende Vertiefung am ersten Holzbauteil vorgesehen sein. Eine solche Erhebung kann als Positionierhilfe zum Positionieren des Zapfens an dem ersten Holzbauteil verwendet werden. Auf diese Weise kann eine korrekte Montage der Verbindung sichergestellt werden. Die vertiefte, in ein Positionierungsloch im ersten Holzbauteil gesetzte Erhebung (die auch als Anschlusszapfen bezeichnet werden kann) erzeugt eine Erhöhung der beispielsweise im 90° Winkel anzusetzenden Kräfte. Zur Erhöhung der Tragfähigkeit oder Druckfestigkeit kann die Erhebung aus einem anderen Material als der restliche Zapfen (auch als Verbinderzapfen bezeichnet) gefertigt sein. Es ist auch möglich, dass der Zapfen zweiteilig ausgeführt ist, nämlich mit einem Verbinderzapfen und einer daran zu montierenden Erhebung (die dann einen Anschlusszapfen bilden kann).

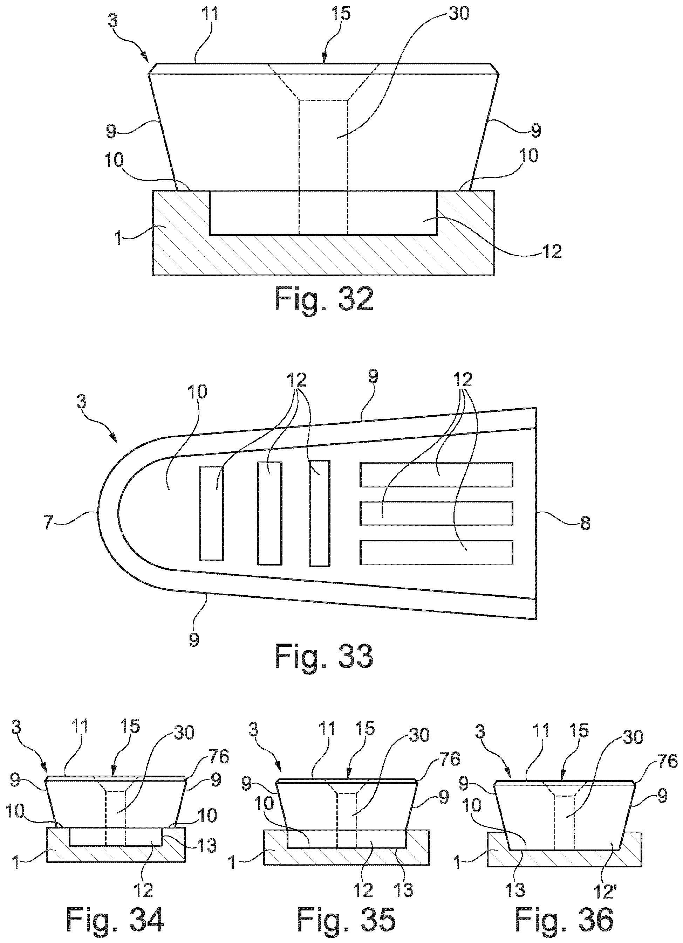

Die Erhebung kann gegenüber dem Zapfen verkleinert (siehe Figur 34) oder über die gesamte Zapfenfläche (siehe Figur 35) aufgebracht sein. Alternativ kann in das Positionierungsloch des ersten Holzbauteils der gesamte Endabschnitt des Zapfens (siehe Figur 36) eingesetzt werden. In einer weiteren Variante kann das Positionierungsloch im ersten Holzbauteil rechtwinkelige Seitenflächen haben und kann der Zapfen mit schrägen Seitenflächen nur an einer Kante anliegen. Die mindestens eine Erhebung kann gegenüber dem Zapfen quer zu einer Einführrichtung in das erste Holzbauteil verkleinert sein, wie zum Beispiel in Figur 34 gezeigt. Es ist auch möglich, dass sich die mindestens eine Erhebung zumindest abschnittsweise über eine gesamte Zapfenfläche am Übergang zwischen Zapfen und Erhebung erstreckt, vergleiche etwa Figur 35. In einer anderen Alternative kann ein Endabschnitt des Zapfens, beispielsweise eines Zapfens mit geneigten Seitenflächen, in eine Vertiefung des ersten Holzbauteils eingeführt sein, siehe beispielsweise Figur 36.

Gemäß einem Ausführungsbeispiel können an der Anschlussfläche des Zapfens mindestens zwei Erhebungen zum formschlüssigen Eingriff in mindestens zwei entsprechende Vertiefungen am ersten Holzbauteil vorgesehen sein. Korrespondierend kann das erste Holzbauteil mindestens zwei Vertiefungen aufweisen, in die mindestens zwei Erhebungen an der Anschlussfläche des Zapfens formschlüssig eingreifen. Eine solche Konfiguration erlaubt eine besonders fehlerrobuste Positionierung des Zapfens in Bezug auf das erste Holzbauteil. Eine Fehlbedienung der Anordnung und der Verbindung kann dadurch ausgeschlossen werden. Insbesondere ist es möglich, auch mehr als zwei Erhebungen an einem Zapfen vorzusehen. Die mehreren Erhebungen können sich auch in unterschiedlichen Richtungen erstrecken, beispielsweise längs und quer an der Anschlussfläche (siehe zum Beispiel Figur 33). Es ist möglich, dass die Anschlussfläche des Verbinderzapfens keine glatte Fläche ist, sondern eine Fläche mit verschiedensten möglichen Erhebungen. Diese sind dann nicht begrenzt, wie bei reinen Erhebungen, sondern die Struktur kann über die ganze Fläche gehen.

Gemäß einem Ausführungsbeispiel können die mindestens zwei Erhebungen an der Anschlussfläche gleich große Flächen aufweisen. Dies ermöglicht eine Relativpositionierung des Zapfens bezüglich dem ersten Holzbauteil, ohne dass eine Fehlmontage auftreten kann.

Gemäß einem Ausführungsbeispiel können die mindestens zwei Erhebungen an der Anschlussfläche unterschiedlich große Flächen aufweisen. Dies ermöglicht es, den Zapfen am ersten Holzbauteil in zuverlässiger und stets korrekter Weise zu montieren, da die Erhebungen unterschiedlicher Flächen nur in einer bestimmten Orientierung des Zapfens relativ zum ersten Holzbauteil in deren Vertiefungen eingeführt sein können.

Gemäß einem Ausführungsbeispiel kann die mindestens eine Erhebung rund, insbesondere kreisförmig, oder polygonal, insbesondere rechteckförmig, sein. Vorzugsweise kann die mindestens eine polygonale Erhebung abgerundete Ecken aufweisen. Diese Formgebung der Erhebung, die korrespondierend zu der Formgebung der entsprechenden Vertiefung im ersten Holzbauteil ausgebildet sein kann, ist einfach fertigbar und erlaubt eine zuverlässige Anbringung des Zapfens am ersten Holzbauteil.

Gemäß einem Ausführungsbeispiel kann das mindestens eine Einführloch in dem Zapfen senkrecht zu der Anschlussfläche und/oder senkrecht zu der Stirnfläche verlaufen. Diese erlaubt eine Befestigung des Zapfens am ersten Holzbauteil auch mit relativ kurzen Schrauben oder Stiften und somit einfach und wenig aufwendig.

Gemäß einem Ausführungsbeispiel kann das mindestens eine Einführloch in dem Zapfen schräg zu der Anschlussfläche und/oder schräg zu der Stirnfläche verlaufen. Mithilfe eines solchen Zapfens ist es möglich, eine Schraube oder ein anderes Befestigungselement durch den schräg verlaufenden Durchgang in das erste Holzbauteil zu setzen (beispielsweise einzuschrauben oder einzuschlagen), so dass im befestigten Zustand das Befestigungselement überwiegend auf Zug beansprucht werden kann. Der Kopf des Befestigungselements liegt vorzugsweise an einer Anlagefläche des Zapfens an. Entstehende Kräfte werden effizient übertragen, so dass die bei der Verbindung von Holzbauteilen (wie Balken) in Längsrichtung auftretenden Kräfte in günstiger Weise auf die stiftförmigen Befestigungselemente übertragen werden.

Gemäß einem Ausführungsbeispiel kann ein Winkel zwischen einer Verlaufsrichtung des mindestens einen Einführlochs in dem Zapfen einerseits und einer Normalen (oder Senkrechten) der Anschlussfläche und/oder einer Normalen (oder Senkrechten) der Stirnfläche andererseits in einem Bereich von 15° bis 75°, insbesondere in einem Bereich von 30° bis 60°, liegen. Vorzugsweise liegt der Winkel bei 45°±5°. In den genannten Winkelbereichen ist eine besonders effiziente Kraftübertragung zwischen Zapfen und erstem Holzbauteil ermöglicht, und zwar mit signifikanten Kraftkomponenten parallel und senkrecht zur Oberfläche des ersten Holzbauteils.

Gemäß einem Ausführungsbeispiel kann eine Mehrzahl von Einführlöchern in dem Zapfen schräg zueinander und/oder schräg zu der Anschlussfläche und/oder schräg zu der Stirnfläche verlaufen. Insbesondere können mindestens zwei oder sogar mindestens drei lösbare Verbindungen mittels Schrauben oder Nägeln zwischen dem Zapfen und dem ersten Holzbauteil gebildet werden, und zwar vorzugsweise entlang von mehreren Erstreckungsrichtungen entsprechend unterschiedlichen Winkelrichtungen. Mit anderen Worten können sich unterschiedliche lösbare Verbindungen entlang unterschiedlicher Erstreckungsrichtungen (zum Beispiel windschief zueinander) durch den Zapfen hindurch in das erste Holzbauteil hinein erstrecken. Dies erhöht die Widerstandsfähigkeit des Zapfens gegen unerwünschtes Abziehen vom ersten Holzbauteil durch Aufbringung einer Zugkraft. Somit erhöht diese Maßnahme signifikant die Auszugskraft, die erforderlich ist, den Zapfen vom ersten Holzbauteil abzuziehen.

Gemäß einem Ausführungsbeispiel kann sich das mindestens eine Einführloch schräg durch die mindestens eine Erhebung hindurch erstrecken. Mit anderen Worten kann sich eine jeweilige schräg montierte lösbare Verbindung nicht nur durch den Zentralbereich des Zapfens, sondern auch durch die daran vorzugsweise einstückig angeschlossene Erhebung hindurch bis in das erste Holzbauteil hinein erstrecken. Dadurch kann eine besonders sichere Montage des Zapfens am ersten Holzbauteil mit einer hohen Auszugskraft kombiniert werden.

Gemäß einem Ausführungsbeispiel kann der Zapfen in einer Querschnittsansicht trapezförmig sein. In entsprechender Weise kann die Tasche oder Nut in einer Querschnittsansicht trapezförmig sein. Diese Geometrie kombiniert eine einfache Herstellbarkeit mit einer zuverlässigen formschlüssigen Verankerung des Zapfens in der Tasche oder Nut des zweiten Holzbauteils.

Gemäß einem Ausführungsbeispiel kann der Zapfen in einer Querschnittsansicht zueinander geneigte Seitenflächen aufweisen, die über Rundungen in die Stirnfläche übergehen. In entsprechender Weise kann die Tasche oder Nut in einer Querschnittsansicht zueinander geneigte innere Seitenflächen aufweisen, die über Rundungen in eine Bodenfläche übergehen. Eine solche Konfiguration vermeidet einen abrupten Übergang von den geneigten Seitenflächen zu der horizontalen Stirnfläche und bietet vorteilhafte Eigenschaften in Hinblick auf Kerbspannungen.

Gemäß einem Ausführungsbeispiel kann der Zapfen in einer Querschnittsansicht zueinander geneigte und jeweils abknickende Seitenflächen aufweisen, die, insbesondere über eine Kante, in die Stirnfläche übergehen. In entsprechender Weise kann die Tasche oder Nut in einer Querschnittsansicht zueinander geneigte und jeweils abknickende innere Seitenflächen aufweisen, die, insbesondere über eine Kante, in eine Bodenfläche übergehen. Gemäß einer solchen Konfiguration kann an einer jeweiligen Seitenfläche des Zapfens ein erster Abschnitt mit einem ersten Neigungswinkel über eine Kante oder einen Knick an einen zweiten Abschnitt mit einem anderen zweiten Neigungswinkel angeschlossen sein. Dies erleichtert weiter den Einlauf des Zapfens in die Tasche oder Nut des zweiten Holzbauteils. Letztere kann entsprechend gestaltet sein.

Gemäß einem Ausführungsbeispiel kann das zweite Holzbauteil seitlich von der Tasche oder Nut einen Verstärkungskragen aufweisen. Beispielsweise kann der Verstärkungskragen als ringförmiger seitlicher Fortsatz um die Tasche oder Nut herum ausgebildet sein, um unmittelbar an eine Außenfläche des ersten Holzbauteils anzugrenzen. Dadurch kann, insbesondere auch im montierten Zustand oder während der Montage, ein unerwünschtes Lösen der Holzbauteile voneinander vermieden werden, indem der Verstärkungskragen die Verbindung stärkt.

Gemäß einem Ausführungsbeispiel kann der Zapfen in einer Querschnittsansicht zueinander geneigte und Stufen aufweisende Seitenflächen aufweisen. In entsprechender Weise kann die Tasche oder Nut in einer Querschnittsansicht zueinander geneigte und Stufen aufweisende innere Seitenflächen aufweisen. Ein stufiger Formschluss kann die Zuverlässigkeit der Befestigung zwischen den beiden Holzbauteilen mittels des Zapfens weiter verbessern.

Gemäß einem Ausführungsbeispiel kann das zweite Holzbauteil in der Tasche oder Nut eine Klebstoffstruktur aufweisen. Alternativ oder ergänzend kann der Zapfen in einer Querschnittsansicht zueinander geneigte Seitenflächen aufweisen, auf und/oder in denen eine Klebstoffstruktur gebildet sein kann. Die formschlüssige Verbindung zwischen Zapfen und zweitem Holzbauteil kann weiter verstärkt werden, indem zwischen den äußeren Seitenwänden des Zapfens und den inneren Seitenwänden des zweiten Holzbauteils im Bereich der Tasche oder Nut zusätzlich eine Klebstoffverbindung ausgebildet wird.

Gemäß einem Ausführungsbeispiel kann der Zapfen in einer Querschnittsansicht doppeltrapezförmig sein. In entsprechender Weise kann die Tasche oder Nut in einer Querschnittsansicht doppeltrapezförmig sein. Der Zapfen kann zum Beispiel durch zwei gestapelte und miteinander verbundene oder einstückige Trapeze oder Kegelstümpfe gebildet sein. Eine solche Geometrie erlaubt einen besonders zuverlässigen Formschluss zwischen dem Zapfen und dem zweiten Holzbauteil, wobei letzteres ebenfalls eine Tasche oder Nut in Doppeltrapezform aufweisen kann. Die beschriebene Maßnahme bewirkt eine Tragfähigkeitserhöhung durch eine geringere Schwächung der Materialstruktur im Bereich der Seitenkante der Frästasche.

Gemäß einem Ausführungsbeispiel kann das mindestens eine Einführloch des Zapfens eine, insbesondere kegelstumpfförmige oder kreiszylindrische, Aufnahme für einen Schraubenkopf aufweisen. Insbesondere kann eine solche Aufnahme einen Schraubenkopf einer Senkkopfschraube formschlüssig aufnehmen und in dem Zapfen ohne Überstand versenken.

Gemäß einem Ausführungsbeispiel kann der Zapfen in einer Draufsicht schildförmig sein. Gemäß einem anderen Ausführungsbeispiel kann der Zapfen in einer Draufsicht dreieckig sein. Ein Einlauf des Zapfens in die Tasche oder Nut kann bei diesen beiden Ausführungsformen besonders fehlerrobust erfolgen.

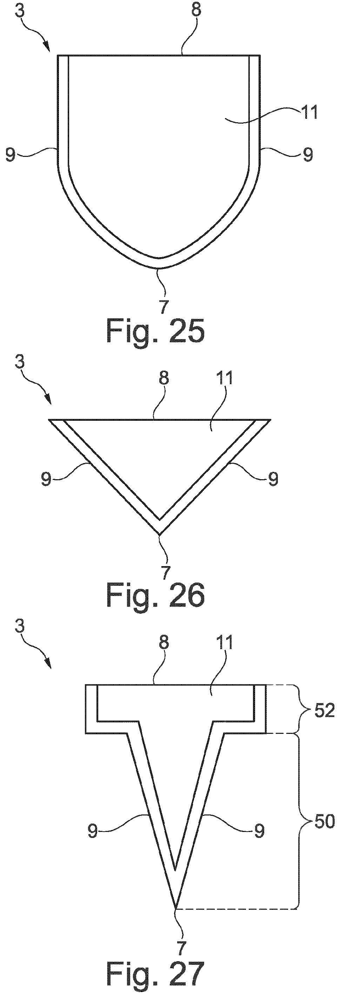

Gemäß einem Ausführungsbeispiel kann der Zapfen in einer Draufsicht einen dreieckigen Abschnitt und einen sich daran anschließenden rechteckigen Abschnitt aufweisen (siehe beispielsweise Figur 27). Der dreieckige Abschnitt kann einen Einlauf des Zapfens in eine Soll-Position in der Tasche oder Nut fördern. Der rechteckige Abschnitt kann die Handhabung des Zapfens vereinfachen, kann eine Flächenerhöhung bewirken und/oder kann eine rückseitige Anschlagfläche bilden, wenn der Zapfen an einer Soll-Position in der Tasche oder Nut angekommen ist. Eine verlängerte Seitenfläche des Verbinderzapfens ist positiv für die Tragfähigkeit bei Varianten, bei denen der Verbinderzapfen aus einem schwächeren Material besteht.

Gemäß einem Ausführungsbeispiel kann der Zapfen an der Anschlussfläche und/oder an der Stirnfläche eine Reibungserhöhungsstruktur (insbesondere eine reibungserhöhende Fläche) aufweisen. Alternativ oder ergänzend kann das erste Holzbauteil und/oder das zweite Holzbauteil an einem dem Zapfen zugewandten Oberflächenabschnitt eine Reibungserhöhungsstruktur aufweisen. Bei einer Reibungserhöhungsstruktur kann es sich um eine physische Struktur handeln, die einen lokal erhöhten Reibungskoeffizienten im Vergleich zu ihrer Umgebung aufweist. Zum Beispiel kann eine solche Reibungserhöhungsstruktur eine Reibplatte, ein aufgerauter Oberflächenabschnitt, ein Oberflächenabschnitt aus einem Material mit höherem Reibungskoeffizienten gegenüber der Umgebung, ein Oberflächenabschnitt mit Reibungserhöhungserhebungen zwischen Reibungserhöhungssenkungen, ein Streifen Schmirgelpapier, ein Oberflächenabschnitt mit Pyramidenstrukturen oder Wellenstrukturen, etc. sein. Durch die Aufrauhung an der Reibungserhöhungsstruktur liegt der Zapfen mit einer höheren Haftreibung an dem ersten Holzbauteil und/oder an dem zweiten Holzbauteil an. Die durch die Reibungserhöhungsstruktur vergrößerte Haftreibung oder Haftung zwischen den beteiligten Elementen (d.h. Zapfen, erstes Holzbauteil und/oder zweites Holzbauteil) wirkt einer Verschiebung der Elemente relativ zueinander entgegen, d.h. die initiale Verschiebung der Elemente relativ zueinander ist erschwert. Eine relative Verschiebung der Elemente zueinander erfolgt somit erst bei - im Vergleich zu einer Holzverbindung ohne Reibungserhöhungsstruktur - erhöhten Traglasten. Die Aufrauhung der Anschlussseite der Reibplatte kann durch Vorsprünge oder Vertiefungen, beispielsweise Einfräsungen, erfolgen. Vorteilhaft ist, dass die Rauigkeit der jeweiligen Anschlussseite erhöht wird, wodurch die Haftreibung zu den zu verbindenden Anschlusselementen erhöht wird.

Durch das Vorsehen mindestens einer Reibungserhöhungsstruktur am Zapfen - und alternativ oder ergänzend am ersten Holzbauteil und/oder am zweiten Holzbauteil - kann mittels Reibung die Schertragfähigkeit erhöht werden, beispielsweise um ca. 40%. Eine solche Reibfläche kann erhalten werden, wenn an der Verbinderseite plan abgefräst wird. Beispielsweise kann die Innenfläche statt plan auch mit einer Pyramidenstruktur oder einer horizontalen Dreiecksline ausgestaltet werden. Insbesondere kann die Höhe der Vertiefungen einer Reibungserhöhungsstruktur in einem Bereich von 0,02 mm bis 3 mm liegen, vorzugsweise in einem Bereich von 0,1 mm bis 1 mm, beispielsweise ca. 0,3±0,2 mm. Das ist insbesondere bei einem kreisförmigen Mehrfachschraubenverbinder von großem Vorteil, aber auch in vielen anderen Ausführungsformen.

Gemäß einem Ausführungsbeispiel kann die Tasche oder Nut unmittelbar in dem zweiten Holzbauteil gebildet sein, insbesondere ausschließlich durch eine Holzfläche des zweiten Holzbauteils begrenzt. Dies bedeutet, dass die Tasche oder Nut in dem zweiten Holzbauteil direkt geformt werden kann, ohne dass hierfür ein Beschlagteil oder dergleichen notwendig ist. Zum Beispiel kann die Tasche oder Nut mit den oben beschriebenen Merkmalen direkt in dem Holz des zweiten Holzbauteils gebildet und von diesem unmittelbar räumlich begrenzt werden. Dies kann zum Beispiel dadurch bewerkstelligt werden, dass die Tasche oder Nut in das zweite Holzbauteil direkt eingefräst wird. Dies führt zu einer Holz-Holz-Holz-Verbindung zwischen den beiden Holzbauteilen und einem aus Holz gebildeten Zapfen. Dies bewirkt eine besonders zuverlässige Verbindung und unterdrückt unterschiedliche Wärmeausdehnungen beteiligter Komponenten aus unterschiedlichen Materialien. Außerdem kann beim unmittelbaren Bilden von Tasche oder Nut im zweiten Holzbauteil selbst eine besonders kompakte und einfach herzustellende Verbindung erreicht werden. Bei der Montage des Verbinders ist dann nur ein Teil anzubringen, das Gegenstück ist im Bauteil eingefräst. Durch die Bohrungen bzw. auch zwei unterschiedlich großen Bohrungen ist die Lage und auch die Ausrichtung genau definiert. Eine falsche Montage kann somit ausgeschlossen werden.

Gemäß einem Ausführungsbeispiel kann das zweite Holzbauteil ein daran montiertes Adapterteil aufweisen, das zumindest teilweise die Tasche oder Nut mit dem Einführungsbereich und dem Haltebereich begrenzt. Ein als gegenüber dem restlichen zweiten Holzbauteil separater Körper gebildetes Adapterteil zum Definieren von Tasche oder Nut erhöht die Gestaltungsfreiheit, da dass Adapterteil beispielsweise aus einem anderen Material gefertigt werden kann als das restliche zweite Holzbauteil und/oder der Zapfen. Zudem erlaubt das separate Vorsehen des Adapterteils das optionale Zwischenanordnen einer Distanzplatte zwischen Adapterteil und dem restlichen zweiten Holzbauteil.

Gemäß einem anderen Ausführungsbeispiel kann das zweite Holzbauteil eine Ausnehmung aufweisen, in die ein Adapterteil eingesetzt ist, das zumindest teilweise die Tasche oder Nut mit dem Einführungsbereich und dem Haltebereich begrenzt. Gemäß einer solchen Ausführungsform wird das Adapterteil in eine Ausnehmung des zweiten Holzbauteils eingeführt und dort befestigt, beispielsweise mittels Klebstoff und/oder mittels Befestigungselementen wie Schrauben. Wenn ein solches Beschlagteil in das zweite Holzbauteil eingesetzt wird, kann eine besonders zuverlässige Verbindung mit dem Zapfen am ersten Holzbauteil bewerkstelligt werden. Die beschriebene Ausführungsform ist also insbesondere dann vorteilhaft, wenn besonders hohe Kräfte aufgenommen werden müssen oder wenn das zweite Holzbauteil hierzu nicht oder nur in eingeschränkter Form in der Lage ist (beispielsweise wenn das zweite Holzbauteil Weichholz aufweist). Das Adapterteil kann vorzugsweise eine Adapterplatte sein und/oder aus Metall, Kunststoff, Kunstharzfaserwerkstoff und/oder HPL (High Pressure Laminate) gebildet sein.

Gemäß einem Ausführungsbeispiel kann das Adapterteil eine oder mehrere Einführlöcher zum Durchführen von einem oder mehreren Befestigungselementen zum Befestigen des Adapterteils an dem zweiten Holzbauteil aufweisen. Beispielsweise kann das Adapterteil an das zweite Holzbauteil angeschraubt, angenagelt und/oder angenietet werden. Vorteilhaft kann hierbei ein schräges Setzen sein, beispielsweise unter Verwendung von geneigten Bohrungen. Um eine Abstandsvorgabe einzuhalten, kann auch eine zusätzliche Distanzplatte zwischen Adapterteil und zweitem Holzbauteil vorgesehen werden.

Gemäß einem Ausführungsbeispiel kann das Adapterteil mittels einer Klebebefestigung an dem zweiten Holzbauteil befestigt sein. Ein Ankleben des Adapterteils an das zweite Holzbauteil kann ein einfaches und sicheres Anbringen ermöglichen. Dies schlägt sich auch in einer besonders zuverlässigen Verbindung zwischen den Holzbauteilen mittels des Zapfens und des Adapterteils nieder.

Gemäß einem Ausführungsbeispiel kann das Adapterteil aus einem vom Zapfen abweichenden Material gefertigt sein. Es ist auch möglich, dass das Adapterteil direkt oder indirekt über eine weitere Distanzplatte an dem Untergrund über eine lösbare oder gesteckte Verbindung befestigt ist.

Gemäß einem Ausführungsbeispiel kann die Tasche oder Nut eine unebene Bodenfläche aufweisen, insbesondere eine Bodenfläche mit zwei zueinander geneigten ebenen Bodenflächenabschnitten. Die unebene Bodenfläche kann eine zentrale Erhebung an der Bodenfläche beinhalten, die ein Einlaufen des Zapfens an eine gewünschte Soll-Position fördern kann. Mit der beschriebenen Maßnahme kann ein größerer Einhängewinkel erreicht werden, was die Montage erleichtert.

Gemäß einem Ausführungsbeispiel kann die Tasche oder Nut einander gegenüberliegende und relativ zueinander geneigte Seitenflächen aufweisen, die in die unebene Bodenfläche münden. Auch diese Konfiguration kann dazu führen, dass der Zapfen in vorbestimmter Weise in die Tasche oder Nut eingeführt und im Inneren des zweiten Holzbauteils zuverlässig befestigt wird.

In einer besonders zweckmäßigen Ausführung kann die lösbare Verbindung zum Beispiel als Schrauben- oder Stiftverbindung mit einer oder mehreren Schrauben, Stiften oder anderen ähnlichen Befestigungselementen ausgeführt sein. Über die Schrauben oder entsprechende Befestigungselemente sind die Zapfen einfach und schnell an beliebigen Stellen montierbar und können bei Bedarf auch versetzt oder nachjustiert werden.

Gemäß einer möglichen Ausgestaltung der Erfindung weist der Zapfen einen sich von einer dem ersten Holzbauteil zugewandten inneren Anschlussfläche zu einer dem zweiten Holzbauteil zugewandten äußeren Stirnfläche hin erweiternden Querschnitt und der Haltebereich der Tasche oder Nut einen sich von einer stirnseitigen Außenfläche des zweiten Holzbauteils nach innen erweiternden Querschnitt auf. Durch eine derartige Kontur können auch Zugkräfte mit hoher Stabilität übertragen werden. Durch die Vermeidung von parallelen Kanten tritt eine Verlängerung der zugbelasteten Fläche auf, was zu günstigeren Zugkräften führt. Eine solche Verbindung kann nicht formschlüssig hergestellt werden, da die Vorrichtung sonst nicht mehr montierbar wäre.

Um eine sichere und positionsgenaue Verbindung zwischen dem Zapfen und dem ersten Holzbauteil zu erreichen, kann an der dem ersten Holzbauteil zugewandten inneren Anschlussfläche des Zapfens eine zum Beispiel in Art einer Passfeder ausgeführte Erhebung zum formschlüssigen Eingriff in eine entsprechende Vertiefung am ersten Holzbauteil vorgesehen sein.

Die Wand-, Decken-, Fassaden- oder Dachelementverbindung kann als Schwalbenschwanzverbindung mit geneigten äußeren Seitenflächen an dem Zapfen und entsprechend geneigten inneren Seitenflächen in der Tasche oder Nut ausgebildet sein. In einer besonders stabilen und tragfähigen Ausführung kann der Zapfen in Form eines sich in Einschubrichtung verjüngenden Keils ausgebildet sein. Dies erleichtert beim Herablassen der Elemente die Zentrierung der Bauteile. Der Zusammenzug der beiden Bauteile erfolgt durch die schräggestellte untere Kante. Der Zapfen kann aber auch die Form eines Kegelstumpfs oder die Form eines blockförmigen Einschubteils aufweisen. Horizontale Stoßflächen verbessern senkrechte Kraftübertragungen.

In einer weiteren möglichen Ausführung kann die Wand-, Decken-, Fassaden- oder Dachelementverbindung auch als T-Verbindung mit einer T-Nut und einem zugehörigen Zapfen mit T-förmigen Querschnitt ausgeführt sein.

Die Seitenflächen der Tasche oder Nut und auch die Außenflächen des Zapfens verlaufen in Einschubrichtung des Zapfens beispielsweise keilförmig aufeinander zu. Der Zapfen und die Tasche oder Nut können aber auch eine gleichbleibende Querschnittsfläche aufweisen.

Der Zapfen (der auch als Verbinderzapfen bezeichnet werden kann) kann Holz oder Holzwerkstoff, vorzugsweise Furnierschichtholz oder Hartholz, aufweisen, Er kann alternativ oder ergänzend auch Kunststoff, Kunstharzfasern oder Metall aufweisen. Allgemeiner kann der Zapfen Holz, Metall, Kunststoff, Beton, Keramik und/oder einen Faserverbund aufweisen.

Bevorzugt kann es sein, dass der Zapfen Holz aufweist oder daraus besteht. Das Ausbilden einer Verbindung zwischen einem ersten Holzbauteil und einem zweiten Holzbauteil mittels eines aus Holz bestehenden Zapfens am ersten Holzbauteil, der in eine Tasche oder Nut unmittelbar am zweiten Holzbauteil eingeführt wird, führt in nachhaltiger Art und Weise und gleichsam vorteilhaft zu einer "Holz-Holz-Holz-Verbindung". Holz als Zapfenmaterial hat den Vorteil eines geringen Gewichts bei großer Festigkeit und führt bei Verbindung zweier Holzbauteile zu geringen thermischen Kräften aufgrund der äußerst ähnlichen thermischen Ausdehnungskoeffizienten der Holzbauteile und des Holz-Zapfens. Auch hat sich ein solcher Holz-Zapfen als äußerst geeignet erwiesen, im verbundenen Zustand der Holzbauteile einem unerwünschten Lösen der Verbindung entgegenzuwirken.

Ein Holz-Verbinder hat auch beim Brandschutz Vorteile, da Stahl- oder Aluminium-Verbinder bei Hitze versagen können.

Beispielsweise kann der Zapfen in Einführrichtung in die Tasche oder Nut eine Länge in einem Bereich von 5 cm bis 20 cm, insbesondere von 7 cm bis 15 cm, aufweisen. Quer zur Einführrichtung in die Tasche oder Nut kann der Zapfen beispielsweise eine Breite in einem Bereich von 2 cm bis 10 cm, insbesondere von 3 cm bis 7 cm, aufweisen. Darüber hinaus kann der Zapfen eine Höhe in einem Bereich von 1 cm bis 10 cm, insbesondere von 2 cm bis 7 cm, aufweisen.

Bei den stab-, balken- oder plattenförmigen Holzbauteilen für eine Wand-, Decken-, Fassaden- oder Dachelementverbindung kann es sich um massive Holzbauteile handeln, wie sie insbesondere beim Hausbau zum Einsatz kommen. Beispielsweise können solche Holzbauteile Holzbalken wie Dachbalken, insbesondere Sparren, Pfetten und/oder Pfosten, für ein Holzdach sein. Es ist auch möglich, als Holzbauteile massive Bauteile wie beispielsweise Brettsperrholz oder Brettstapelholz vorzusehen, wie sie im Hausbau zum Einsatz kommen. Beispielsweise können die Holzbauteile mindestens 2 m lang sein und/oder mindestens 20 kg wiegen. In anderen Ausführungsformen können die Holzbauteile auch kürzer sein, beispielsweise bis zu 50 cm lang sein. Die Holzbauteile können aus Hartholz, Weichholz, Echtholz, Furnierholz und/oder Spanholz aufgebaut sein. Die massiven oder zusammengesetzten Holzbauteile können aus Hartholz, Weichholz, Holzwerkstoffen auf Holz, Gips oder Zement wie beispielsweise Furnierschichtholz und/oder auf Spänen oder Strands basierenden Holzwerkstoffen aufgebaut sein.

Im Folgenden werden exemplarische Ausführungsbeispiele der vorliegenden Erfindung mit Verweis auf die folgenden Figuren detailliert beschrieben.
Figur 1 zeigt eine Wand-, Decken-, Fassaden- oder Dachelementverbindung in einer Unteransicht, geschnittenen Seitenansicht und Draufsicht gemäß einem exemplarischen Ausführungsbeispiel der Erfindung.
Figur 2 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Draufsicht und einer Seitenansicht.
Figur 3 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 4 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 5 zeigt eine Adapterplatte für eine Wand-, Decken-, Fassaden- oder Dachelementverbindung gemäß einem anderen exemplarischen Ausführungsbeispiel der Erfindung in einer Draufsicht und einer Seitenansicht.
Figur 5a zeigt eine Adapterplatte für eine Wand-, Decken-, Fassaden- oder Dachelementverbindung gemäß noch einem anderen exemplarischen Ausführungsbeispiel der Erfindung in einer Draufsicht und einer Seitenansicht.
Figur 6 zeigt eine Anordnung mit Zapfen und lösbarer Verbindung für die Adapterplatte gemäß Figur 5 in einer Draufsicht und einer Seitenansicht.
Figur 7 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 8 zeigt einen Zapfen zwischen zwei Holzbauteilen einer Wand-, Decken-, Fassaden- oder Dachelementverbindung gemäß einem anderen exemplarischen Ausführungsbeispiel der Erfindung in einer Querschnittsansicht.
Figur 9 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 10 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 11 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 12 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 13 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 14 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 15 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 16 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 17 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 18 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 19 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 20 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 21 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 22 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 23 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 24 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 25 zeigt einen Zapfen für eine Wand-, Decken-, Fassaden- oder Dachelementverbindung gemäß einem anderen exemplarischen Ausführungsbeispiel der Erfindung in einer Draufsicht.
Figur 26 zeigt einen Zapfen für eine Wand-, Decken-, Fassaden- oder Dachelementverbindung gemäß einem anderen exemplarischen Ausführungsbeispiel der Erfindung in einer Draufsicht.
Figur 27 zeigt einen Zapfen für eine Wand-, Decken-, Fassaden- oder Dachelementverbindung gemäß einem anderen exemplarischen Ausführungsbeispiel der Erfindung in einer Draufsicht.
Figur 28 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Draufsicht und einer Seitenansicht.
Figur 29 zeigt eine Reibungserhöhungsstruktur für einen Verbinderzapfen gemäß einem exemplarischen Ausführungsbeispiel der Erfindung.
Figur 30 zeigt ein an einem zweiten Holzbauteil angebrachtes Adapterteil für eine Wand-, Decken-, Fassaden- oder Dachelementverbindung gemäß einem anderen exemplarischen Ausführungsbeispiel der Erfindung in einer Seitenansicht, und zeigt einen an einem ersten Holzbauteil angebrachten Zapfen für das Adapterteil in einer Seitenansicht.
Figur 31 zeigt in einer Draufsicht das Adapterteil gemäß Figur 30 und eine optionale Distanzplatte zum optionalen Anordnen zwischen dem Adapterteil und dem zweiten Holzbauteil gemäß einem exemplarischen Ausführungsbeispiel der Erfindung.
Figur 32 zeigt einen Zapfen für eine Wand-, Decken-, Fassaden- oder Dachelementverbindung in einem ersten Holzbauteil gemäß einem exemplarischen Ausführungsbeispiel der Erfindung in einer Querschnittsansicht.
Figur 33 zeigt eine Draufsicht eines Zapfens mit einer Vielzahl von Erhebungen an einer Anschlussfläche.
Figuren 34-36 zeigen unterschiedliche Konfigurationen eines Zapfens mit Erhebung bzw. ohne eigenständige Erhebung in einem zugehörigen Positionierungsloch eines ersten Holzbauteils gemäß exemplarischen Ausführungsbeispielen der Erfindung.

Gleiche oder ähnliche Komponenten in unterschiedlichen Figuren sind mit gleichen Bezugsziffern versehen.

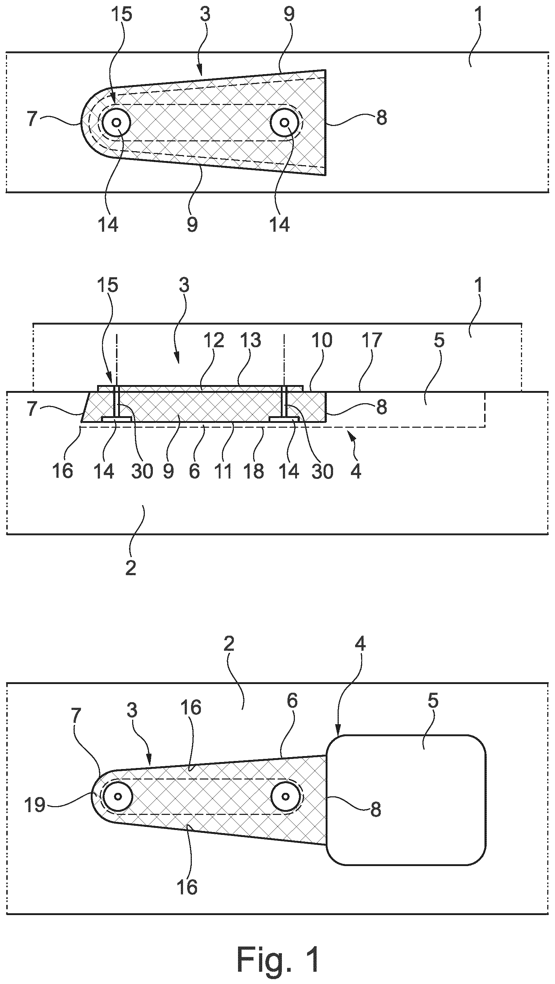

**Figur 1** zeigt eine Wand-, Decken-, Fassaden- oder Dachelementverbindung in einer Unteransicht, geschnittenen Seitenansicht und Draufsicht gemäß einem exemplarischen Ausführungsbeispiel der Erfindung.

Die Wand-, Decken-, Fassaden- oder Dachelementverbindung umfasst einen am ersten Holzbauteil 1 angeordneten Zapfen 3 mit einer sich in Richtung eines zweiten Holzbauteils 2 erweiternden Außenkontur und eine am zweiten Holzbauteil 2 vorgesehene Tasche oder Nut 4, die einen Einführungsbereich 5 zum Einführen des Zapfens 3 und einen Haltebereich 6 mit einer an die Außenkontur des Zapfens 3 angepassten, sich nach innen erweiternden Innenkontur zur Halterung des Zapfens 3 aufweist.

Bei der in Figur 1 in verschiedenen Ansichten gezeigten Ausführung weist der Zapfen 3 eine sich in Einschubrichtung verjüngende Keilform mit einem trapezförmigen Querschnitt auf. Der Zapfen 3 enthält eine in Einschubrichtung gesehen schlankere vordere Endfläche 7 und eine breitere hintere Endfläche 8, wobei die vordere Endfläche 7 abgerundet ist und die hintere Endfläche 8 geradlinig verläuft. Der Zapfen 3 weist außerdem geneigte äußere Seitenflächen 9 auf. Die Seitenflächen 9 sind so geneigt, dass sich der Zapfen 3 im Querschnitt von einer dem ersten Holzbauteil 1 zugewandten inneren Anschlussfläche 10 zu einer dem zweiten Holzbauteil 2 zugewandten äußeren Stirnfläche 11 hin trapezförmig erweitert. Der Zapfen 3 weist an seiner dem ersten Holzbauteil 1 zugewandten inneren Anschlussfläche 10 eine in Art einer Passfeder ausgebildete Erhöhung 12 zum formschlüssigen Eingriff in eine entsprechende Vertiefung 13 im ersten Holzbauteil 1 auf. Durch eine hier als Schraubverbindung mit mehreren Schrauben 14 ausgeführte lösbare Verbindung 15 ist der Zapfen 3 an dem ersten Holzbauteil 1 befestigt.

Wie insbesondere aus der unteren Ansicht der Figur 1 hervorgeht, weist die zu dem Zapfen 3 gehörende Tasche oder Nut 4 in dem zweiten Holzbauteil 2 einen verbreiterten Einführungsbereich 5 und eine schlankeren Haltebereich 6 auf. Der Haltebereich 6 ist derart ausgeführt, dass die geneigten inneren Seitenflächen 16 der Tasche oder Nut 4 in diesem Bereich so geneigt sind, dass sich die Tasche oder Nut 4 im Haltebereich 6 im Querschnitt von einer stirnseitigen Außenfläche 17 des zweiten Holzbauteils 2 zu einer inneren Bodenfläche 18 hin trapezförmig erweitert. Auch die Tasche oder Nut 4 weist im Haltebereich 4 einen sich entsprechend der Form des Zapfens 3 in Einschubrichtung des Zapfens 3 keilförmig verjüngenden Verlauf mit einer sich vom Einführungsbereich 5 bis zu einem abgerundeten inneren Ende 19 hin verringernden Breite auf. Der Haltebereich 6 der Nut 4 kann zum Beispiel mit einem Schwalbenschwanzfräser hergestellt werden.

Insbesondere zeigt Figur 1 eine Anordnung für eine Wand-, Decken-, Fassaden- oder Dachelementverbindung zur Verbindung stab-, balken- oder plattenförmiger Holzbauteile 1, 2. Diese Anordnung weist den Zapfen 3 mit Einführlöchern 30 und zusätzlich die von dem Zapfen 3 separate lösbare Verbindung 15 (auch als lösbare Verbindungsstruktur bezeichnet) auf, die hier in Form von zwei Schrauben 14 ausgebildet ist. Jede dieser Schrauben 14 wird lösbar durch ein zugeordnetes der Einführlöcher 30 des Zapfens 3 hindurchgeführt und in das erste Holzbauteil 1 eingeführt, wodurch der Zapfen 3 am ersten Holzbauteil 1 montiert ist. Der Zapfen 3 ist somit ausgebildet, mittels der lösbaren Verbindung 15 an seiner Anschlussfläche 10 an dem ersten Holzbauteil 1 befestigt zu werden. Der Zapfen 3 ist mit einer sich von der Anschlussfläche 10 in Richtung seiner gegenüberliegenden Stirnfläche 11, die zu dem zweiten Holzbauteil 2 weist, erweiternden Außenkontur ausgebildet. Ferner ist der Zapfen 3 zur Einführung in den Einführungsbereich 5 der am zweiten Holzbauteil 2 angeordneten Tasche oder Nut 4 ausgebildet. Darüber hinaus ist der Zapfen 3 zur Halterung, Fixierung oder Festlegung in dem Haltebereich 6 der Tasche oder Nut 4 mit einer an die Außenkontur des Zapfens 3 angepassten, sich nach innen erweiternden Innenkontur ausgebildet.

Die in Figur 1 dargestellte Wand-, Decken-, Fassaden- oder Dachelementverbindung weist also die Anordnung mit Zapfen 3 und lösbarer Verbindung 15 auf, die - auch reversibel - an dem ersten Holzbauteil 1 angebracht werden kann, bevor der Zapfen 3 in die Tasche oder Nut 4 des zweiten Holzbauteils 2 eingeführt wird, um die beiden Holzbauteile 1, 2 miteinander zu verbinden.

Das erste Holzbauteil 1 wird also an der Anschlussfläche 10 des Zapfens 3 mittels der lösbaren Verbindung 15 befestigt. An das zweite Holzbauteil 2 wird der Zapfen 3 angeschlossen, indem das zweite Holzbauteil 2 die Tasche oder Nut 4 mit dem Einführungsbereich 5 zum Einführen des Zapfens 3 und dem Haltebereich 6 zum Haltern des Zapfens 3 aufweist. Der Haltebereich 6 ist mit einer an die Außenkontur des Zapfens 3 angepassten, sich nach innen erweiternden Innenkontur ausgebildet, sodass eine formschlüssige Verbindung zwischen Zapfen 3 und zweitem Holzbauteil 2 in der Tasche oder Nut 4 ausgebildet werden kann.

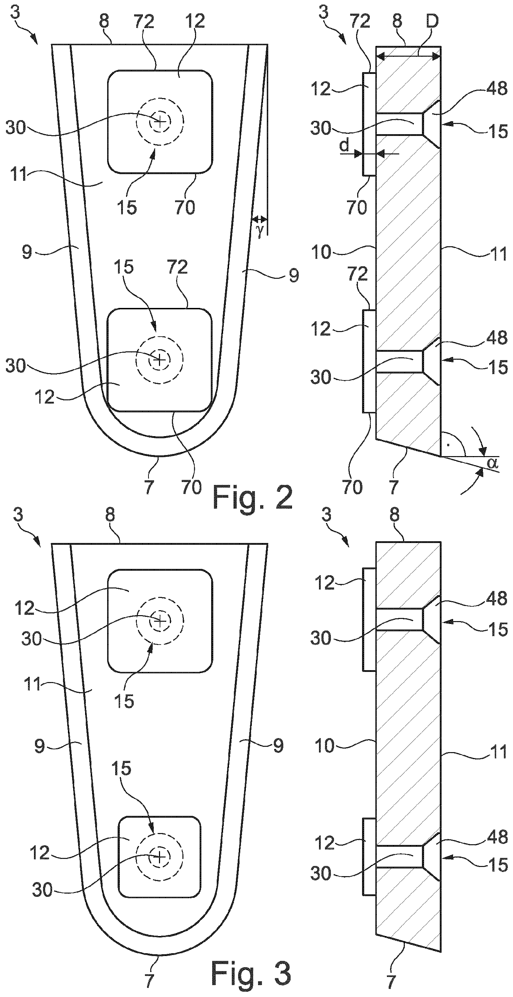

Figuren 2-29 zeigen verschiedene Ausführungsformen von Anordnungen aus Zapfen 3 und lösbaren Verbindungen 15 sowie ersten und/oder zweiten Holzbauteilen 1, 2 und Wand-, Decken-, Fassaden- oder Dachelementverbindungen, die das Prinzip von Figur 1 weiter verbessern. Zur Vermeidung von Wiederholungen wird für jede von Figuren 2-29 auf die Beschreibung von Figur 1 Bezug genommen, die auch für Figuren 2-29 gilt, sofern sich nicht aus den nachfolgenden Beschreibungen ein anderes ergibt. Die einzelnen Elemente aus Figuren 1-29 können in beliebiger Weise miteinander kombiniert werden.

Figur 1 zeigt eine kreisförmige Vertiefung in einem Oberflächenbereich der Einführlöcher 30. Dort kann eine Tellerkopfschraube gesetzt werden (nicht gezeigt). Bei anderen Ausführungsformen ist eine Senkkopfform in einem Oberflächenbereich der Einführlöcher 30 gebildet, in die eine Senkkopfschraube gesetzt werden kann (nicht gezeigt).

**Figur 2** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Draufsicht (linke Darstellung) und einer Seitenansicht (rechte Darstellung). Gemäß Figur 2 sind zwei gleich große rechteckige Anschlusszapfen vorgesehen.

In Figur 2 ist zu erkennen, dass an der Anschlussfläche 10 des Zapfens 3 zwei Erhebungen 12 zum formschlüssigen Eingriff in zwei entsprechende Vertiefungen 13 an einem nicht gezeigten ersten Holzbauteil 1 vorgesehen sind. Gemäß Figur 2 weisen die zwei Erhebungen 12 auf der Anschlussfläche 10 gleich große Flächen und gleiche geometrische Formen auf, nämlich abgerundete Rechtecke.

Dies erlaubt es, den Zapfen 3 in einer ersten Orientierung und in einer um 180° gedrehten Orientierung an einem in Figur 2 nicht gezeigten ersten Holzbauteil 1 zu montieren. Die im Wesentlichen rechteckigen Erhebungen 12 gemäß Figur 2 erhöhen die Kontaktfläche und erlauben daher eine besonders gute Kraftübertragung.

Gemäß Figur 2 verläuft jedes der Einführlöcher 30 in dem Zapfen 3 senkrecht zu der Anschlussfläche 10 und senkrecht zu der Stirnfläche 11. Die Anschlussfläche 10 und die Stirnfläche 11 sind parallel zueinander angeordnet. Dies führt zu einem kompakten Design und zur Verwendbarkeit von kurzen Schrauben 14 zum Einführen in die Einführlöcher 30 zum Ausbilden der lösbaren Verbindung 15.

Gemäß Figur 2 ist jede der Erhebungen 12 rechteckförmig mit abgerundeten Ecken ausgebildet. Diese polygonale Geometrie bietet einen zusätzlichen Verdrehschutz des Zapfens 3 gegenüber dem ersten Holzbauteil 1.

Jedes der Einführlöcher 30 des Zapfens 3 weist eine kegelstumpfförmige (oder alternativ kreiszylindrische, nicht gezeigt) Aufnahme 48 für einen Schraubenkopf auf. Für die in Figur 2 dargestellte Geometrie kann eine Senkkopfschraube mit kegelstumpfförmigem Schraubenkopf eingesetzt werden und ohne Überstand im Zapfen 3 versenkt werden. In anderen Ausführungsformen kann mit einer kreiszylindrischen Aufnahme eine Senkkopfschraube mit kreiszylindrischem Schraubenkopf ohne Überstand im Zapfen 3 versenkt werden.

Bei der Ausführungsform gemäß Figur 2 dienen horizontale Flächen auf gegenüberliegenden Seiten des Zapfens 3 zur besonders effizienten Kraftübertragung senkrechter Kräfte. Als Anschlusszapfenabschnitte sind zwei Erhebungen 12 zum formschlüssigen Eingriff in eine entsprechende Vertiefung 13 am nicht gezeigten ersten Holzbauteil 1 vorgesehen. Diese Konfiguration des Zapfens 3 in Kombination mit der korrespondierenden Konfiguration des ersten Holzbauteils 1 stellt eine Positionierungshilfe zur Montage des Zapfens 3 am ersten Holzbauteil 1 bereit.

Die obere bzw. hintere Endfläche 8 des Zapfens 3 stellt eine obere Abschlussfläche dar, die nach dem Setzen des Verbinderzapfens 3 in der Schwalbenschwanztasche (entsprechend dem Haltebereich 6) des zweiten Holzbauteils 2 zur Einführungstasche (entsprechend dem Einführungsbereich 5) ausgerichtet ist. Damit erfüllt die hintere Endfläche 8 die Funktion einer Abschlussfläche des Verbinders.

Die Anschlussfläche 10 des Zapfens 3 ist jene Innenfläche des Zapfens 3, die im montierten Zustand die dem ersten Holzbauteil 1 zugewandte innere Anschlussfläche bildet. Diese erfüllt die Funktion einer eben aufliegenden Anschlussfläche des Verbinderzapfens 3 zum ersten Holzbauteil 1.

Die Stirnfläche 11 des Zapfens 3 bildet eine Außenfläche des Verbinderzapfens 3, die im Klemmbereich der Schwalbenschwanztasche zum zweiten Holzbauteil 2 zeigt. Diese hat die Funktion einer äußeren Abschlussfläche.

Die Einführlöcher 30 des Zapfens 3 sind als Durchgangslöcher (insbesondere Durchgangsbohrungen) ausgeführt und können alternativ auch als Sackloch ausgebildet sein, das von einer Schraube 14 oder einem anderen Befestigungselement durchstoßen werden kann. Die Einführlöcher 30 bilden eine Führungsbohrung durch den Verbinderzapfen 3. Vorzugsweise entspricht die Durchmesserbohrung dem Schraubendurchmesser. Die Einführlöcher 30 dienen zur leichten und exakten Befestigung der zur Montage anzubringenden Schrauben 14, vorzugsweise Holzschrauben.

In den Einführlöchern 30 kann eine Senkbohrung vorgesehen sein. Diese kann insbesondere eine 90° Senkung der Sack- bzw. Durchgangsbohrung bilden. Dies ermöglicht einen planen Abschluss des Schraubenkopfes mit der Außenfläche des Verbinderzapfens.

Die Dicke "d" der Erhebung 12 wird auch als Anschlusszapfenhöhe beim Verbinderzapfen bezeichnet. Zum Beispiel kann die Dicke "d" der Erhebung 12 in einem Bereich von 0.5 mm bis 1 cm liegen, insbesondere in einem Bereich von 1 mm bis 5 mm. Sie korrespondiert zu der Anschlusszapfentiefe bei der Bohrung im ersten Holzbauteil 1, d.h. zu der Tiefe der Vertiefung 13. Vorzugsweise ist die Anschlusszapfenhöhe bzw. die Höhe des Anschlusszapfens zur Gewährleistung eines planen Anschlusses der Innenfläche des Verbinderzapfens 3 an das erste Holzbauteil 1 kleiner als die Anschlusszapfentiefe im Bohrloch des ersten Holzbauteils 1. Dies dient der Definition der kraftübertragenden Fläche des Anschlusszapfens und der Verringerung der Kippgefahr bei einer Momentübertragung.

Die Dicke "D" des Zapfens 3 ohne die Dicke "d" der Erhebung 12 wird auch als Verbinderzapfenstärke bezeichnet und gibt die Stärke des Verbinderzapfens 3 an. Die Einstellung besagter Dicke des Zapfens 3 dient der Definition der kraftübertragenden Einfädelungsfläche des Verbinderzapfens. Sie entspricht der Erhöhung der Seitenfläche bzw. der Verankerungstiefe im anzuschließenden zweiten Holzbauteil 2.

Der in Figur 2 angegebene Flankenwinkel α der vorderen Endfläche 7 des Zapfens 3 kann beispielsweise zwischen 5° und 45° betragen, insbesondere zwischen 10° und 30°. Dieser Flankenwinkel α stellt eine Vorgabe der Neigung der Seitenfläche und der Einfädelungsfläche dar. Dies beeinflusst die Festigkeit der Schwalbenschwanzfrästasche und bildet eine Grundlage für den Effekt des Zusammenziehens zwischen dem ersten Holzbauteil 1 und dem zweiten Holzbauteil 2 während des Setzvorganges.

Der ebenfalls in Figur 2 gezeigte Konuswinkel γ von der Seitenfläche des Zapfens 3 entspricht einer seitlichen Neigungsvorgabe des Verbinderzapfens 3. Der Konuswinkel γ erfüllt die Funktion einer zentrierenden klemmenden Wirkung beim Einfädeln des Verbinderzapfens 3.

Mit Bezugszeichen 70 ist in Figur 2 eine horizontale untere Anschlusszapfenfläche dargestellt. Diese entspricht einer Kontaktfläche zwischen dem Anschlusszapfen, d.h. der Erhebung 12, und dem Bohrloch des ersten Holzbauteils 1, d.h. der Vertiefung 13, im montierten Zustand. Die horizontale untere Anschlusszapfenfläche 70 erfüllt die Funktion einer Anschlagsfläche zur Positionierung. Bei einer rechteckigen Ausbildung des Anschlusszapfens fungieren die Flächen als Verdrehsicherung während des Befestigungsvorgangs mit Holzschrauben.

Die in Figur 2 mit Bezugszeichen 72 dargestellte horizontale obere Anschlusszapfenfläche stellt eine weitere Kontaktfläche zwischen Anschlusszapfen, d.h. der Erhebung 12, und dem Bohrloch des ersten Holzbauteils 1, d.h. der Vertiefung 13, des ersten Holzbauteils 1 dar. Sie übernimmt die Funktion einer kraftübertragenden Fläche bei senkrechten Kräften vom zweiten Holzbauteil 2 über die Einfädelungsfläche und über die obere Kontaktfläche des Anschlusszapfens in das erste Holzbauteil 1.

Der in Figur 2 dargestellte Zapfen 3 ist als keilförmiger Verbinderzapfen mit runder Einfädelungsfläche ausgebildet. Durch den Konuswinkel der Seitenfläche ist ein konisch zulaufender Grundkörper des Verbinderzapfens mit runder Einfädelungs- und Endfläche für eine leichtere Zentrierung im Klemmbereich vorgegeben.

Darüber hinaus ist in Figur 2 die Einfädelungsfläche rund ausgebildet, d.h. die vordere Endfläche 7 ist abgerundet. Mit anderen Worten ist der untere Bereich oder die Endfläche 7 des Verbinderzapfens 3 zur Einführung des Verbinderzapfens 3 in den Klemmbereich der Schwalbenschwanztasche ausgebildet und zur leichteren Einfädelung gerundet. Dies erfüllt die Funktion einer zentrierenden Einführung des Verbinderzapfens 3. Bei der beschriebenen Konfiguration ist eine Kraftübertragungsfläche bei der Übertragung abhebender vertikaler Kräfte von dem zweiten Holzbauteil 2 zu dem ersten Holzbauteil 1 gebildet.

**Figur 3** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht. Gemäß Figur 3 sind zwei unterschiedlich große rechteckige Anschlusszapfen vorgesehen.

Der Zapfen 3 gemäß Figur 3 unterscheidet sich von dem Zapfen 3 gemäß Figur 2 insbesondere dadurch, dass gemäß Figur 3 die zwei Erhebungen 12 auf der Anschlussfläche 10 unterschiedlich große Flächen aufweisen. In der Draufsicht des Zapfens 3 gemäß Figur 3 ist zu erkennen, dass sich dieser in Einführrichtung verjüngt. Korrespondierend hierzu ist die Erhebung 12 an der in Einführrichtung vorderen Endfläche 7 des Zapfens 3 flächenkleiner als die Erhebung 12 an der in Einführrichtung hinteren Endfläche 8 des Zapfens 3.

Bei der Ausführungsform gemäß Figur 3 sind also die Größen der Erhebungen 12 am Zapfen 3 unterschiedlich. Anders ausgedrückt sind geometrische Größenunterschiede zwischen zwei Erhebungen 12 am Zapfen 3 vorgesehen. Dies erfüllt die Funktion, dass dadurch die Einbaurichtung des Verbinderzapfens 3 bei einer unterschiedlichen Ausbildung der Größe des Anschlusszapfens bzw. der Erhebung 12 vorgegeben ist. Dies macht die Benutzung des Zapfens 3 für einen Benutzer intuitiv und beugt einer Fehlbenutzung vor.

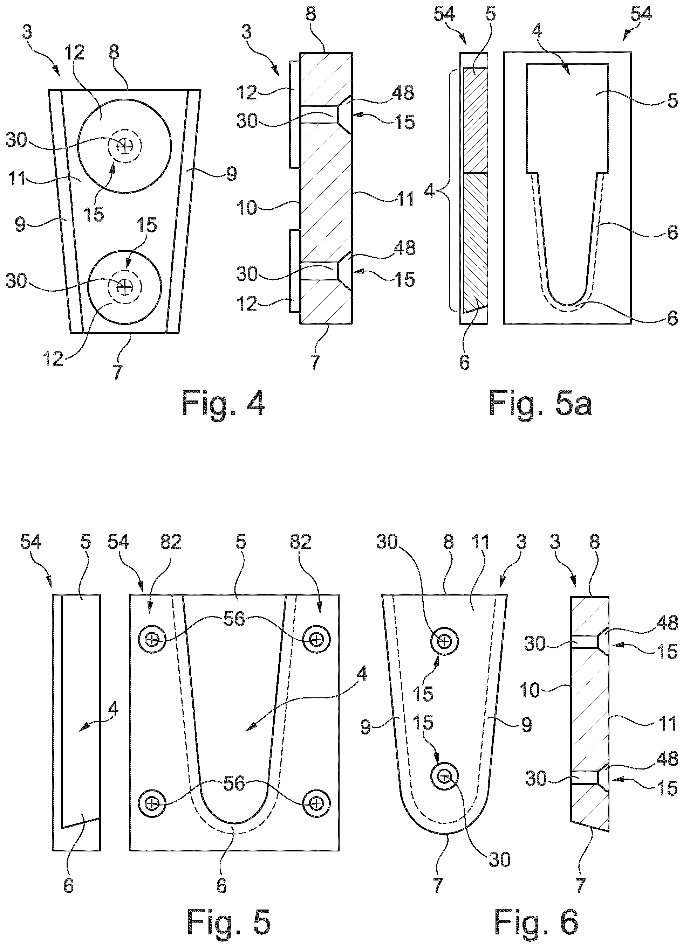

**Figur 4** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht. Figur 4 zeigt einen stumpfen Zapfen 3 mit horizontaler Stoßkante.

Der Zapfen 3 gemäß Figur 4 unterscheidet sich von dem Zapfen 3 gemäß Figur 3 insbesondere dadurch, dass gemäß Figur 4 die Erhebungen 12 rund, genauer gesagt kreisförmig, sind. Darüber hinaus ist gemäß Figur 4 die vordere Endfläche 7 nicht abgerundet, sondern durch einen geradlinigen Umrissabschnitt begrenzt. Dadurch gelangt der Zapfen 3 tiefer in die Tasche oder Nut 4, sodass die Kontaktfläche vergrößert und dadurch die Verbindung stabilisiert werden kann.

Gemäß Figur 4 ist eine gerade horizontale Einfädelungsfläche in Form einer geraden horizontalen vorderen Endfläche 7 vorgesehen. Eine solche horizontale Endfläche bzw. Einfädelungsfläche im Winkel von 90° erfüllt die Funktion einer kraftübertragenden Fläche bei vertikalen Kraftübertragungen zwischen dem zweiten Holzbauteil 2 und dem ersten Holzbauteil 1. Bei der Ausführungsform von Figur 4 ist somit ein konischer Verbinderzapfen 3 mit gerader horizontaler Einfädelungsfläche bereitgestellt. Durch den Konuswinkel der Seitenfläche ist ein konisch zulaufender Grundkörper des Verbinderzapfens 3 mit stumpfer Einfädelungs- und Endfläche für besonders hohe vertikale Kraftübertragungen kombiniert.

**Figur 5** zeigt ein als Adapterplatte ausgebildetes Adapterteil 54 für eine Wand-, Decken-, Fassaden- oder Dachelementverbindung gemäß einem anderen exemplarischen Ausführungsbeispiel der Erfindung in einer Draufsicht und einer Seitenansicht.

Das dargestellte Adapterteil 54 wird in eine Ausnehmung oder Aussparung eines nicht dargestellten zweiten Holzbauteils 2 eingesetzt und dort befestigt. Das

Adapterteil 54 ist vorzugsweise aus Metall oder Kunststoff gefertigt und kann daher mit hoher Tragkraft ausgebildet werden. Das Adapterteil 54 kann aber auch aus Holz, Furnierholz, etc. hergestellt sein. Gemäß Figur 5 begrenzen zwei Arme 82 des Adapterteils 54 seitlich die Tasche oder Nut 4 mit dem Einführungsbereich 5 und dem Haltebereich 6, wenn das Adapterteil 54 in die Aussparung des zweiten Holzbauteils 2 eingeführt ist. Wie ebenfalls in Figur 5 dargestellt ist, weist das plattenförmige Adapterteil 54 mehrere Einführlöcher 56 (vier Stück im dargestellten Ausführungsbeispiel) zum Durchführen von Befestigungselementen (beispielsweise Schrauben, Gewindestangen, Nägel oder Stifte) zum Befestigen des Adapterteils 54 an dem zweiten Holzbauteil 2 auf. Alternativ oder ergänzend zum Befestigen mittels der genannten Befestigungselemente kann das Adapterteil 54 auch mittels einer Klebebefestigung an dem zweiten Holzbauteil 2 befestigt werden. Entsprechender Klebstoff kann entweder von einem Benutzer aufgebracht werden oder als Klebstoffdepot am Adapterteil 54 und/oder am zweiten Holzbauteil 2 vorgesehen sein.

Anschaulich handelt es sich bei dem plattenförmigen Adapterteil 54 um einen Beschlag, eine Einhängeplatte oder eine Verstärkung zum Bereitstellen eines hochtragfähigen Anschlusses in Kombination mit Verbindern oder Befestigungselementen mit vertikalen oder mit schräg gestellten Schrauben oder dergleichen. Wenn das Adapterteil 54 an dem zweiten Holzbauteil 2 montiert ist, kann eine Schwalbenschwanztasche bestehend aus Einführungstasche und Klemmbereich erhalten werden. Somit kann eine einfache Frästasche oder eine andere Aussparung oder Ausnehmung im anzuschließenden zweiten Holzbauteil 2 zur Herstellung einer Klemmverbindung eingesetzt werden. Anschaulich bildet das Adapterteil 54 im dargestellten Ausführungsbeispiel eine Gegenplatte für den Verbinderzapfen 3. Somit kann eine auf dem zweiten Holzbauteil 2 fixierbare Schwalbenschwanzfrästasche aus hoch verdichtetem Material bereitgestellt werden. Dies bewirkt eine Erhöhung der Zugtragfähigkeit zwischen dem ersten Holzbauteil 1 und den zweiten Holzbauteil 2 aufgrund der Erhöhung der Materialfestigkeiten im Fräskantenbereich des Klemmbereiches.

Die Verwendung eines separaten Adapterteils 54 zum Definieren der Tasche oder Nut 4, welche ansonsten die oben beschriebenen Merkmale aufweisen kann, ist besonders dann vorteilhaft, wenn das zweite Holzbauteil Weichholz aufweist. Die Gegenplatte in Form des Adapterteils 54 kann dann in eine Ausfräsung in dem Weichholz eingesetzt und dort verklebt werden, sodass auch bei einem zweiten Holzbauteil 2 aus Weichholz eine zuverlässige Verbindung ausgebildet werden kann.

**Figur 5a** zeigt ein anderes als Adapterplatte ausgebildetes Adapterteil 54 für eine Wand-, Decken-, Fassaden- oder Dachelementverbindung gemäß einem anderen exemplarischen Ausführungsbeispiel der Erfindung in einer Draufsicht und einer Seitenansicht.

Während sich gemäß Figur 5 die Aussparung des Adapterteils 54 bis zu einem Rand des Adapterteils 54 hin erstreckt, sodass ein zugehöriger Zapfen 3 vom Rand des Adapterteils 54 aus in dasselbe eingeschoben werden kann, ist gemäß Figur 5a die Aussparung zum Bilden der Tasche oder Nut 4 in dem Adapterteil 54 als Binnenaussparung oder inselförmige Aussparung ausgebildet, die vollumfänglich von Material des Adapterteils 54 umschlossen und begrenzt ist. Die Aussparung des Adapterteils 54 hat im gezeigten Ausführungsbeispiel einen rechteckigen Abschnitt, in den der Zapfen 3 eingesetzt werden kann. Angrenzend an den rechteckigen Abschnitt hat die Aussparung des Adapterteils 54 einen zulaufenden Abschnitt, wobei ein in den rechteckigen Abschnitt eingeführter Zapfen 3 in den zulaufenden Abschnitt vorgeschoben werden kann und dadurch am Adapterteil 54 und am zweiten Holzbauteil 2 gehaltert oder festgelegt werden kann. Es ist möglich, die Aussparung als Frästasche auszubilden.

Allgemeiner ist die Aussparung des Adapterteils 54 gemäß Figur 5a mit einem Einfädelungsbereich oder Einführbereich 5 (im Ausführungsbeispiel der rechteckige Abschnitt) zum Einfädeln des Verbinderzapfens 3 in das zweite Holzbauteil 2 ausgebildet. Ferner weist die Aussparung des Adapterteils 54 einen Klemmbereich als Haltebereich 6 zum Heranziehen des zweiten Holzbauteils 2 an das erste Holzbauteil 1 und zur Schaffung eines spiellosen Kontaktes zwischen Verbinderzapfen 3 und Klemmbereich auf.

**Figur 6** zeigt eine Anordnung mit Zapfen 3 (auch als Verbinderzapfen bezeichnet) und lösbarer Verbindung 15 für die Adapterplatte 54 gemäß Figur 5 (oder für jene gemäß Figur 5a) in einer Draufsicht und einer Seitenansicht. Figur 6 zeigt eine lösbare Verbindung im 90° Winkel zum anzuschließendem Bauteil.

Wie bezugnehmend auf Figur 5 beschrieben, kann der Zapfen 3 in einem mittels der lösbaren Verbindung 15 mit dem ersten Holzbauteil 1 verbundenen Zustand in die Aussparung des Adapterteils 54 in dem zweiten Holzbauteil 2 eingefädelt und durch Verschieben festgeklemmt oder gehaltert werden. Durch die Ausbildbarkeit des Adapterteils 54 aus Holzwerkstoff, Metall oder Kunststoff kann die Festigkeit und Zuverlässigkeit der Verbindung zwischen den Holzbauteilen 1, 2 vermittels des Zapfens 3 und des Adapterteils 54 weiter verbessert werden. Bei der Ausführungsform gemäß Figur 6 sind keine Erhebungen 12 oder Anschlusszapfen bzw. Fremdfedern vorgesehen, diese können bei anderen Ausführungsbeispielen jedoch implementiert werden.

Alternativ zum Vorsehen eines Adapterteils 54 zum Einführen in eine Aussparung des zweiten Holzbauteils 2, wie bezugnehmend auf Figuren 5, 5a beschrieben, ist es auch möglich, die Tasche oder Nut 4 zum Einführen des Zapfens 3 unmittelbar in dem zweiten Holzbauteil 2 zu bilden. Dann kann die Tasche oder Nut 4 ausschließlich durch eine Holzfläche des zweiten Holzbauteils 2 begrenzt sein. Der Zapfen 3 gemäß Figur 6 kann auch in eine solche Tasche oder Nut 4 eingeführt werden, die integral in dem zweiten Holzbauteil 2 gefertigt ist, beispielsweise mittels Fräsens von Holz.

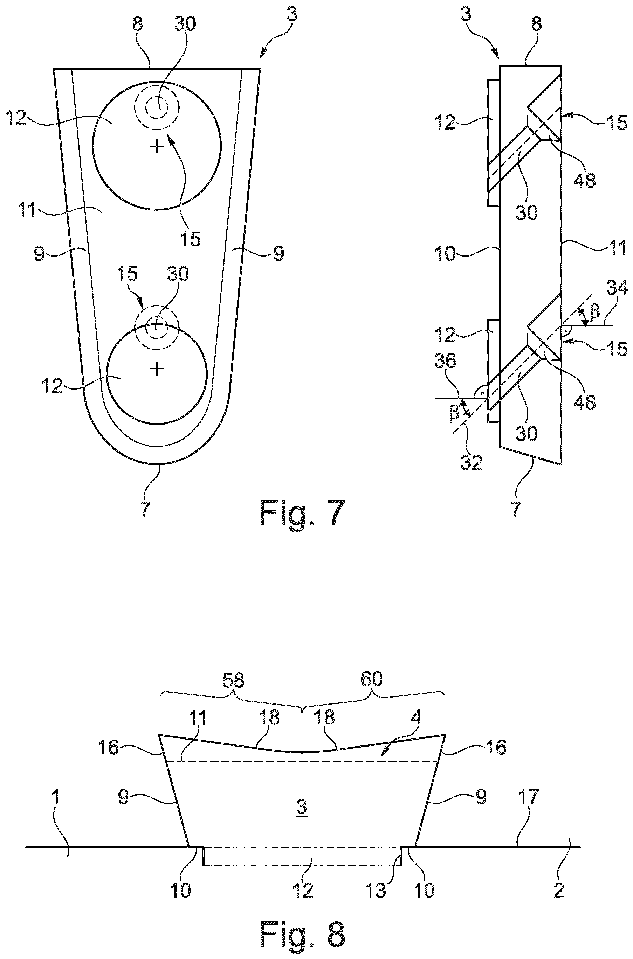

**Figur 7** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht. Figur 7 stellt eine lösbare Verbindung mit schräger Verbindungsmittelanordnung dar.

Bei der Ausführungsform gemäß Figur 7 sind zwei Einführlöcher 30 in dem Zapfen 3 schräg zu der Anschlussfläche 10 und schräg zu der Stirnfläche 11 orientiert, wobei die Anschlussfläche 10 und die Stirnfläche 11 parallel zueinander sind. Entsprechend sind zwei lösbare Verbindungen 15 mittels Schrauben ausgeführt, die sich durch das jeweils schräge Einführloch 30 hindurch und somit durch den gesamten Zapfen 3 und hinein in das erste Holzbauteil 1 erstrecken. Die beiden Schrauben erstrecken sich durch die beiden Einführlöcher 30 parallel zueinander. Bei anderen Ausführungsformen können jedoch auch unterschiedliche Winkel vorgesehen werden und die Erstreckungsrichtungen daher nicht parallel zueinander ausgebildet sein. Das schräge Implementieren der jeweiligen lösbaren Verbindung 15 in Bezug auf die Verbindungsflächen zwischen den Holzbauteilen 1, 2 erhöht die Auszugskraft des Zapfens 3 und somit den Schutz gegen unerwünschtes Lösen vom ersten Holzbauteil 1. Wie gezeigt, erstreckt sich auch jedes der Einführlöcher 30 schräg durch die jeweils zugeordnete Erhebung 12 hindurch und eine zugeordnete Schraube schräg in das erste Holzbauteil 1 hinein. Somit erstreckt sich eine jeweilige schräg montierte lösbare Verbindung 15 nicht nur durch den Hauptkörper des Zapfens 3, sondern auch durch die daran einstückig angeschlossene Erhebung 12 hindurch bis in das erste Holzbauteil 1 hinein. Auf diese Weise kann eine zuverlässige Montage des Zapfens 3 am ersten Holzbauteil 1 sichergestellt werden und eine hohe Auszugskraft gegen unerwünschtes Lösen erreicht werden.

Wie in Figur 7 gezeigt, ist ein spitzer Winkel β zwischen einer Verlaufsrichtung 32 des jeweiligen Einführlochs 30 in dem Zapfen 3 einerseits und einer Normalen 36 der Anschlussfläche 10 sowie einer Normalen 34 der Stirnfläche 11 andererseits gebildet. Anschaulich führt der von null verschiedene Winkel β zu einer Zerlegung der Kraftkomponenten in eine horizontale und in eine vertikale Komponente. Besonders bevorzugt ist ein Winkel β von 45°, wobei der Winkel β allgemeiner in einem Bereich von 15° bis 75° liegen kann.

Anschaulich stellt die Ausführungsform gemäß Figur 7 geneigte Schrauben bzw. einen geneigten Schraubenkanal an dem Zapfen 3 bereit. Somit kann eine Neigung des Schraubkanals zum Ausbilden der lösbaren Verbindung 15 implementiert werden. Der Neigungswinkel β beträgt beispielsweise 45°. Die Schraubenkanäle in Form der Einführlöcher 30 können parallel zueinander, gegenläufig oder in 90° und 45° geneigt zueinander sein.

Die schrägen Schraubenkanäle gemäß Figur 7 führen vorteilhaft zu einer Erhöhung der Zugtragfähigkeit der Schraubenverbindung durch Vermeidung einer faserparallelen Verschraubung im ersten Holzbauteil 1. Die Ausführungsform von Figur 7 ermöglicht eine bessere Übertragung von Zugkräften und Druckkräften.

**Figur 8** zeigt einen Zapfen 3 zwischen zwei Holzbauteilen 1, 2 einer Wand-, Decken-, Fassaden- oder Dachelementverbindung gemäß einem anderen exemplarischen Ausführungsbeispiel der Erfindung in einer Querschnittsansicht. Figur 8 zeigt eine Ausführungsform mit einer Doppeltasche. Figur 8 zeigt einen Nut- bzw. Frästaschenbereich mit beispielhafter M-förmiger Ausbildung des Unterbodens.

Gemäß Figur 8 weist die Tasche oder Nut 4 des zweiten Holzbauteils 2 (oder alternativ eines Adapterteils 54, vergleiche Figuren 5, 5a) eine unebene Bodenfläche 18 auf. Die Bodenfläche 18 ist mit zwei zueinander geneigten ebenen Bodenflächenabschnitten 58, 60 versehen. Im Gegensatz hierzu ist gemäß Figur 8 die Stirnfläche 11 des Zapfens 3 eben bzw. planar. Die Tasche oder Nut 4 weist zudem einander gegenüberliegende und relativ zueinander geneigte Seitenflächen 9 auf, die in die unebene Bodenfläche 18 münden. Die unebene Bodenfläche 18 ist derart ausgebildet, dass diese in einem zentralen Abschnitt gegenüber einem peripheren Abschnitt erhöht ist.

Die beschriebene Ausführungsform von Figur 8 stellt anschaulich eine Frästasche zum schrägen Einhängen der Elemente bereit. Für diesen Zweck ist eine Schwalbenschwanztasche 4 mit doppelt geneigter Bodenfläche 18 bereitgestellt, die aufgrund ihrer Erscheinungsform in der Querschnittsansicht von Figur 8 als M-Tasche bezeichnet werden kann. Figur 8 betrifft also die Ausbildung der Einführungstasche und des Klemmbereiches durch eine gegenseitig geneigte bzw. M-förmige Bodenfläche 18. Mit Vorteil bewirkt dies eine Vergrößerung des Einfahrbereiches bzw. der schrägen (d.h. nicht rechtwinkligen) Zuführung des Verbinderzapfens 3 zur Montageerleichterung der zu verbindenden Holzbauteile 1 und 2.

Zur Verbesserung einer nicht rechtwinkligen Einhängung des mit dem Zapfen 3 versehenden ersten Holzbauteils 1 kann der Bodenbereich der Tasche oder Nut 4 im anzuschließenden zweiten Holzbauteil 2 (oder in einem separaten Adapterteil 54, nicht gezeigt in Figur 8) M-förmig ausgebildet sein, wie in Figur 8 dargestellt.

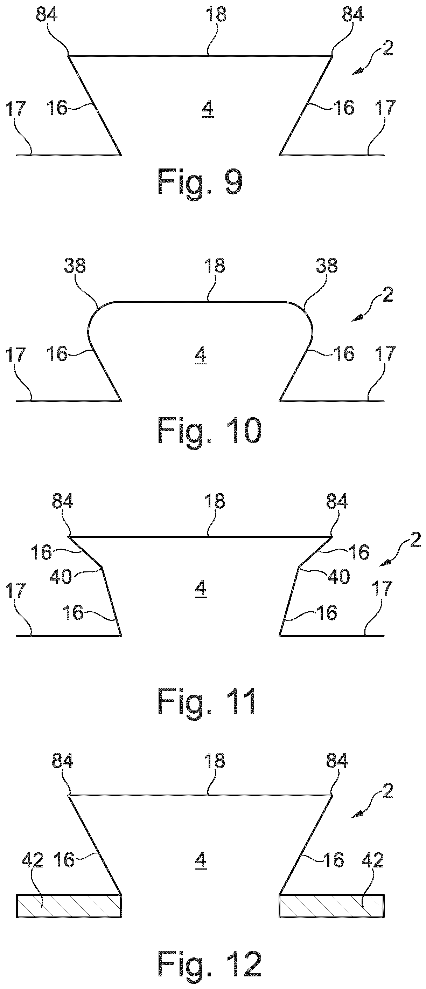

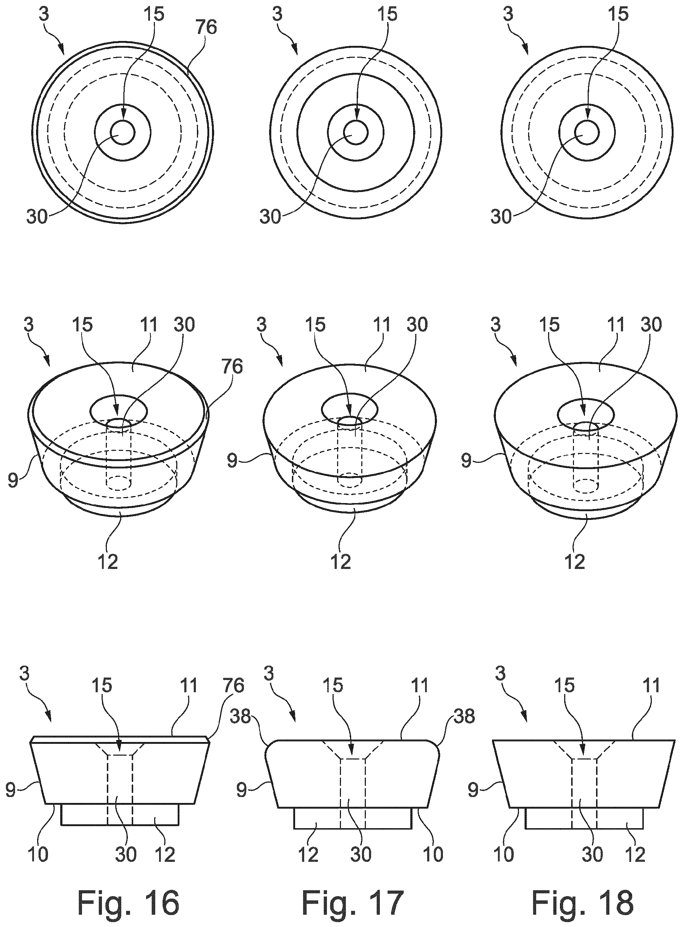

Nachfolgend werden bezugnehmend auf Figur 9-15 Ausführungsbeispiele eines zweiten Holzbauteils 2 mit einer Tasche oder Nut 4 beschrieben, die eine Geometrie aufweisen, mit denen ein Ausreißen in einer Frästasche zuverlässig unterbunden werden kann. Die dargestellten Hinterschnitte erlauben es daher, eine erhöhte Haltekraft zwischen den Holzbauteilen 1, 2 und dem Zapfen 3 zu erreichen. Die Ausführungsbeispiele des zweiten Holzbauteils 2 mit der Tasche oder Nut 4 gemäß Figur 9-15 können mit den vorangehend bezugnehmend auf Figuren 1-8 und/oder mit den nachfolgend bezugnehmend auf Figuren 16-29 beschriebenen Zapfen 3 kombiniert werden.

**Figur 9** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem exemplarischen Ausführungsbeispiel der Erfindung in einer Querschnittsansicht. Figur 9 zeigt einen Nut- bzw. Frästaschenbereich mit beispielhafter gerader Ausbildung des Unterbodens für einen Verbinderzapfen mit kegelförmigem Querschnitt.

Bei dieser Ausführungsform ist die Tasche oder Nut 4 in einer Querschnittsansicht trapezförmig. Auch der zugehörige, nicht dargestellte Zapfen 3 kann in einer Querschnittsansicht trapezförmig sein. In Kombination mit der trapezförmigen Tasche oder Nut 4 des zweiten Holzbauteils 2 kann dadurch eine formschlüssige Schwalbenschwanzverbindung zwischen den beiden Holzbauteilen 1, 2 vermittels des Zapfens 3 bewerkstelligt werden. Diese Ausführungsform zeichnet sich durch eine hohe Haltekraft aus.

**Figur 10** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 10 zeigt den bespielhaften Querschnitt des Nutbereichs für einen Anschlusszapfen mit kegelförmigem Querschnitt und abgerundeten Verbinderkanten.

Die Ausführungsform gemäß Figur 10 unterscheidet sich von der Ausführungsform gemäß Figur 9 dadurch, dass gemäß Figur 10 die Tasche oder Nut 4 in der Querschnittsansicht zueinander geneigte innere Seitenflächen 16 aufweist, die über innere Rundungen 38 in eine innere Bodenfläche 18 übergehen. Es ist möglich, dass der nicht dargestellte Zapfen 3 in einer Querschnittsansicht in korrespondierende Weise zueinander geneigte äußere Seitenflächen 9 aufweist, die über äußere Rundungen 38 in die äußere Stirnfläche 11 übergehen. Beim Ausbilden der Verbindung unter Verwendung der Rundungen 38 gemäß Figur 10 stellen sich vorteilhafte Eigenschaften in Hinblick auf die Kerbspannung ein.

**Figur 11** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 11 zeigt einen Nut- bzw. Frästaschenbereich mit beispielhafter geknickter Seitenkante für einen Verbinderzapfen mit geknicktem kegelförmigen Querschnitt.

Die Ausführungsform gemäß Figur 11 unterscheidet sich von der Ausführungsform gemäß Figur 9 dadurch, dass gemäß Figur 11 die Tasche oder Nut 4 in der Querschnittsansicht zueinander geneigte und jeweils abknickende innere Seitenflächen 16 aufweist, die über eine jeweilige Kante 84 in eine innere Bodenfläche 18 übergehen. Korrespondierend kann der Zapfen 3 (nicht dargestellt in Figur 11) in einer Querschnittsansicht zueinander geneigte und jeweils abknickende äußere Seitenflächen 9 aufweisen, die über eine Kante 40 in die äußere Stirnfläche 11 übergehen. Mit dieser Ausführungsform ist ein doppelter Formschluss aufgrund der Seitenflächenabschnitte diesseits und jenseits der Kante 40 ermöglicht, was die Zuverlässigkeit der Verbindung zwischen den Holzbauteilen 1, 2 weiter erhöht.

**Figur 12** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 12 zeigt einen Nut- bzw. Frästaschenbereich mit beispielhafter geraden Ausbildung des Unterbodens für einen Verbinderzapfen mit kegelförmigem Querschnitt, dessen außenliegender Anschlussbereich durch ein Zusatzmaterial verstärkt ist.

Die Ausführungsform gemäß Figur 12 unterscheidet sich von der Ausführungsform gemäß Figur 9 dadurch, dass gemäß Figur 12 das zweite Holzbauteil 2 anschlussflächenseitig einen Verstärkungskragen 42 aufweist, der beispielsweise aus Metall oder Kunststoff hergestellt sein kann. Der Verstärkungskragen 42 liegt im montierten Zustand vorzugsweise direkt am ersten Holzbauteil 1 an und verstärkt die Verbindung zwischen den Holzbauteilen 1, 2. Insbesondere bei der Verbindung dünner Platten stellt diese Ausführungsform eine weiter erhöhte Festigkeit bereit, wenn beispielsweise der Verstärkungskragen 42 an dem ersten Holzbauteil 1 verklebt und/oder mittels einer Schraubenverbindung befestigt wird.

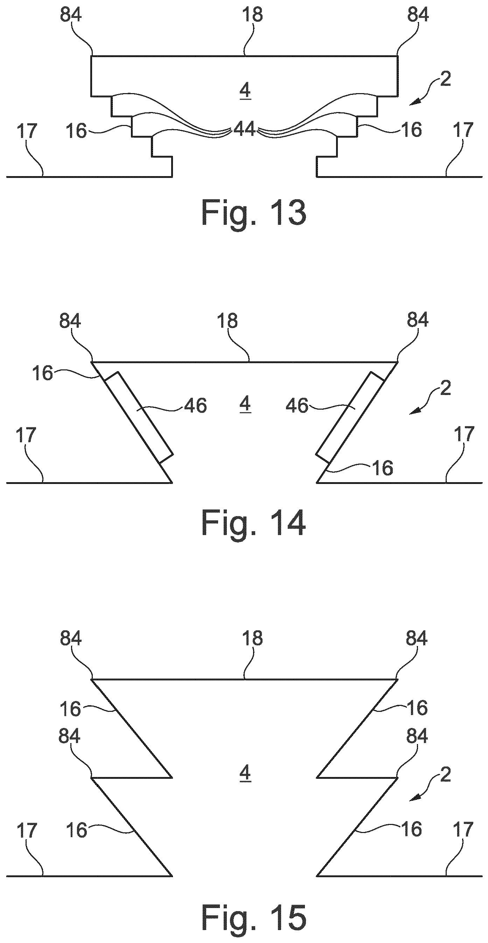

**Figur 13** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 13 zeigt einen Nut- bzw. Frästaschenbereich mit gestufter Ausbildung der Seitenkante für einen entsprechenden Verbinderzapfen.

Die Ausführungsform gemäß Figur 13 unterscheidet sich von der Ausführungsform gemäß Figur 9 dadurch, dass gemäß Figur 13 die Tasche oder Nut 4 in einer Querschnittsansicht zueinander geneigte und Stufen 44 aufweisende innere Seitenflächen 16 aufweist. Entsprechend kann der Zapfen 3 in einer Querschnittsansicht zueinander geneigte und Stufen 44 aufweisende äußere Seitenflächen 9 aufweisen. Die Stufen 44 können umlaufend sein. Es können im Allgemeinen mindestens zwei, mindestens drei oder mindestens vier Stufen vorgesehen sein. Dadurch kann eine Verzahnung oder eine wellenförmige Verbindung mit besonderer Festigkeit bereitgestellt werden.

**Figur 14** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 14 zeigt einen Nut- bzw. Frästaschenbereich mit beispielhafter gerader Ausbildung des Unterbodens für einen Verbinderzapfen mit kegelförmigem Querschnitt. In den Seitenkanten des Verbinders oder der Tasche können Klebstoffbereiche integriert sein.

Die Ausführungsform gemäß Figur 14 unterscheidet sich von der Ausführungsform gemäß Figur 9 dadurch, dass gemäß Figur 14 auf oder in den geneigten inneren Seitenflächen 16 des zweiten Holzbauteils 2 zum Ausbilden der Tasche oder Nut 4 eine Klebstoffstruktur 46 gebildet ist. Die Klebstoffstruktur 46 kann ein Klebstoffdepot bilden, um mittels einer Verklebung die geneigten inneren Seitenflächen 16 zusätzlich an korrespondierenden äußeren Seitenflächen 9 des Zapfens 3 zu fixieren.

**Figur 15** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Figur 15 zeigt einen Nut- bzw. Frästaschenbereich mit doppelter Ausbildung der Seitenkante für einen Verbinderzapfen mit doppeltem kegelförmigen Querschnitt. Ein entsprechender Verbinderzapfen kann zum Beispiel zweiteilig sein.

Die Ausführungsform gemäß Figur 15 unterscheidet sich von der Ausführungsform gemäß Figur 9 dadurch, dass gemäß Figur 15 die Tasche oder Nut 4 in der Querschnittsansicht doppeltrapezförmig ist. In entsprechender Weise kann der nicht dargestellte zugehörige Zapfen 3 in einer Querschnittsansicht ebenfalls doppeltrapezförmig sein. Die dadurch erzeugte doppelte Schwalbenschwanzverbindung gestaltet die Zuverlässigkeit der Kopplung der beiden Holzbauteile 1, 2 vermittels des Zapfens 3 noch zuverlässiger.

**Figur 16** zeigt einen Zapfen 3 für eine Wand-, Decken-, Fassaden- oder Dachelementverbindung gemäß einem exemplarischen Ausführungsbeispiel der Erfindung in einer Draufsicht (oben), einer dreidimensionalen Ansicht (Mitte) und einer Querschnittsansicht (unten). Figur 16 zeigt einen Verbinderzapfen mit angefaster oberer Verbinderkante.

Bei dieser Ausführungsform ist der Zapfen 3 in einer Querschnittsansicht trapezförmig. In Kombination mit einer trapezförmige Tasche oder Nut 4 eines zweiten Holzbauteils 2 kann dadurch eine formschlüssige Schwalbenschwanzverbindung zwischen den beiden Holzbauteilen 1, 2 vermittels des Zapfens 3 bewerkstelligt werden. Diese Ausführungsform zeichnet sich durch eine hohe Haltekraft aus.

Der Zapfen 3 gemäß Figur 16 ist kegelstumpfförmig mit einer sich an die Anschlussfläche 10 anschließenden scheibenförmigen Vertiefung 12. An der Stirnfläche 11 hat der Zapfen 3 eine umlaufende Fase 76, um scharfe Kanten zu vermeiden. Durch den Zapfen 3 erstreckt sich eine einzige Durchgangsbohrung 30 mit einer Formgebung, die zu einer Senkkopfschraube zum Ausbilden einer lösbaren Verbindung 15 mit einem ersten Holzbauteil 1 komplementär ist. Das Einführloch 30 hat einen zylindrischen Abschnitt zum Aufnehmen eines Schraubenschafts sowie einen sich daran anschließenden kegelstumpfförmigen Endabschnitt zum Aufnehmen eines kegelstumpfförmigen Schraubenkopfs. Alternativ kann sich an den zylindrischen Abschnitt zum Aufnehmen eines Schraubenschafts ein radial aufgeweiteter weiterer zylindrischer Abschnitt zum Aufnehmen eines zylindrischen oder scheibenförmigen Schraubenkopfs anschließen (nicht gezeigt). Beispielsweise kann der Zapfen 3 gemäß Figur 16 aus Holz oder Holzwerkstoff gebildet werden, alternativ aus Kunststoff und/oder Metall.

Die Fase 76 an der oberen Verbinderkante dient auch als Schnittschutz beim Verschrauben des kreisrunden Verbinders, der sich beim Verschrauben mitdrehen kann.

**Figur 17** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 17 zeigt einen Verbinderzapfen mit abgerundeter oberer Verbinderkante.

Die Ausführungsform gemäß Figur 17 unterscheidet sich von der Ausführungsform gemäß Figur 16 dadurch, dass gemäß Figur 17 der Zapfen 3 in einer Querschnittsansicht zueinander geneigte Seitenflächen 9 aufweist, die über Rundungen 38 in die Stirnfläche 11 übergehen. Beim Ausbilden der Verbindung unter Verwendung der Rundungen 38 gemäß Figur 17 stellen sich vorteilhafte Eigenschaften in Hinblick auf die Kerbspannung ein.

Die Ausführungsform gemäß Figur 17 unterscheidet sich von der Ausführungsform gemäß Figur 16 also dadurch, dass gemäß Figur 17 der Zapfen 3 zwischen den geneigten Seitenwänden 9 und der Stirnfläche 11 eine Rundung 38 aufweist. Somit ist gemäß Figur 17 eine gerundete Außenkante des Verbinderzapfens 3 vorgesehen. Die gerundete Kante zwischen den Seitenflächen 9 und der Außen- oder Stirnfläche 11 des Verbinderzapfens 3 erfüllt die Funktion, dass durch Vermeidung von mechanischen Spannungsspitzen im Bereich der Bodenfläche und der Seitenfläche die Ausbildung des Klemmbereiches in dem Schwalbenschwanzverbinder zu einer Tragfähigkeitserhöhung der Verbindung insbesondere bei horizontalen Lasten führt.

Die stärkere Abrundung der Kante des Zapfens 3 und infolgedessen die Abrundung der inneren Kante der Frästasche führt zu einer Verringerung der Kerbspannung in der Frästasche. Infolgedessen steigt die Materialfestigkeit im Kantenbereich der Frästasche. Eine Bruchgefahr der Frästasche verringert sich.

**Figur 18** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 18 zeigt einen Zapfen mit scharf geschnittener Verbinderkante.

Die Ausführungsform gemäß Figur 18 unterscheidet sich von der Ausführungsform gemäß Figur 16 dadurch, dass gemäß Figur 18 keine Fase 76 zwischen der Stirnfläche 11 und den geneigten Seitenflächen 9 vorgesehen ist, sondern eine scharfe Kante.

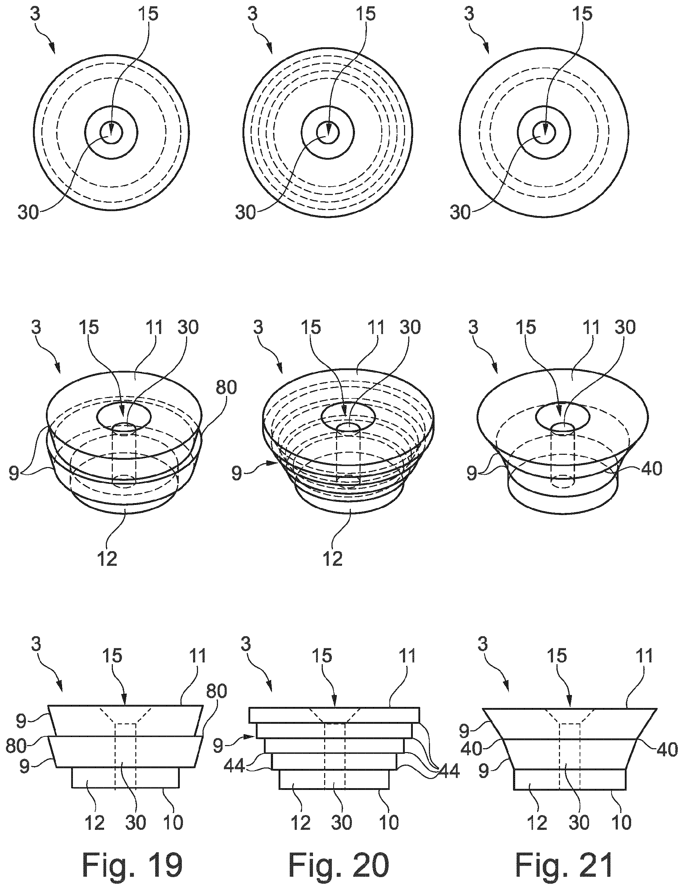

**Figur 19** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 19 zeigt einen Verbinderzapfen mit doppelter kegelförmiger Seitenkante.

Die Ausführungsform gemäß Figur 19 unterscheidet sich von der Ausführungsform gemäß Figur 18 dadurch, dass gemäß Figur 19 der Zapfen 3 in einer Querschnittsansicht doppeltrapezförmig ist. Die dadurch erzeugte doppelte Schwalbenschwanzverbindung gestaltet die Zuverlässigkeit der Kopplung der beiden Holzbauteile 1, 2 vermittels des Zapfens 3 noch zuverlässiger.

Die Ausführungsform gemäß Figur 19 unterscheidet sich von der Ausführungsform gemäß Figur 18 dadurch, dass gemäß Figur 19 der Zapfen 3 zwei koaxiale, übereinander angeordnete und einstückig miteinander verbundene (oder alternativ mehrteilige) Kegelstümpfe aufweist, wobei sich an den unteren Kegelstumpf die Erhebung 12 anschließt. Zwischen den beiden Kegelstümpfen ist ein Hinterschnitt 80 gebildet, der die Zuverlässigkeit der Befestigung verbessert. Die Ausführungsform gemäß Figur 19 hat eine Doppelvertiefung bzw. weist einen Doppelzapfen auf.

**Figur 20** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 20 zeigt einen Verbinderzapfen mit gestufter Seitenkante.

Die Ausführungsform gemäß Figur 20 unterscheidet sich von der Ausführungsform gemäß Figur 18 dadurch, dass gemäß Figur 20 der Zapfen 3 in einer Querschnittsansicht zueinander geneigte und Stufen 44 aufweisende Seitenflächen 9 aufweist. Anschaulich weist der Zapfen 3 gemäß Figur 20 eine mehrfach abgestufte Kegelstumpfform auf. Die Stufen 44 können umlaufend ausgebildet sein. Es können im Allgemeinen mindestens zwei, mindestens drei oder mindestens vier Stufen vorgesehen sein. Dadurch kann eine Verzahnung oder eine wellenförmige Verbindung mit besonderer Festigkeit bereitgestellt werden.

Die Ausführungsform gemäß Figur 20 unterscheidet sich von der Ausführungsform gemäß Figur 18 somit dadurch, dass gemäß Figur 20 zwischen einer Mehrzahl von Zylinderabschnitten des Zapfens 3 mit unterschiedlichen Außenradien mehrere Stufen 44 gebildet sind, an welcher die Außenfläche des Zapfens 3 von der Stirnfläche 11 her in Richtung der Anschlussfläche 10 nach innen abgestuft ist. Somit ist gemäß Figur 20 eine stufenförmige Seitenfläche 9 des Verbinderzapfens 3 gebildet. Dies bewirkt eine Erhöhung der Zugtragfähigkeit zwischen den Holzbauteilen 1 und 2 durch Versetzung der zu übertragenden Kräfte. Die Ausführungsform gemäß Figur 20 hat mehrere Holzstufen.

**Figur 21** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 21 zeigt einen Verbinderzapfen mit geknickter Seitenfläche.

Die Ausführungsform gemäß Figur 21 unterscheidet sich von der Ausführungsform gemäß Figur 18 dadurch, dass gemäß Figur 21 der Zapfen 3 in einer Querschnittsansicht zueinander geneigte und jeweils abknickende Seitenflächen 9 aufweist, deren zueinander geneigte Seitenflächenabschnitte über eine Kante 40 ineinander übergehen. Mit dieser Ausführungsform ist ein doppelter Formschluss aufgrund der Seitenflächenabschnitte diesseits und jenseits der Kante 40 ermöglicht, was die Zuverlässigkeit der Verbindung zwischen den Holzbauteilen 1, 2 weiter erhöht.

Die Ausführungsform gemäß Figur 21 unterscheidet sich von der Ausführungsform gemäß Figur 18 also dadurch, dass gemäß Figur 21 zwischen zwei Kegelstumpfabschnitten des Zapfens 3 eine Kante 40 gebildet ist, an welcher die Außenfläche des Zapfens 3 von der Stirnfläche 11 her in Richtung der Anschlussfläche 10 abnickt. Die abgeknickte Seitenfläche des Verbinderzapfens 3 führt zu einer durchgängigen Seitenfläche 9 mit zwei unterschiedlichen Flankenwinkeln. Die Funktion dieser Maßnahme ist in einer Erhöhung der Materialstärke in der Seitenfläche des Klemmbereiches in der Schwalbenschwanztasche zu sehen. Infolgedessen können höhere Gesamtzugtragfähigkeiten zwischen den beiden Holzbauteilen 1, 2 ermöglicht werden. Die Ausführungsform gemäß Figur 21 hat geknickte Kanten.

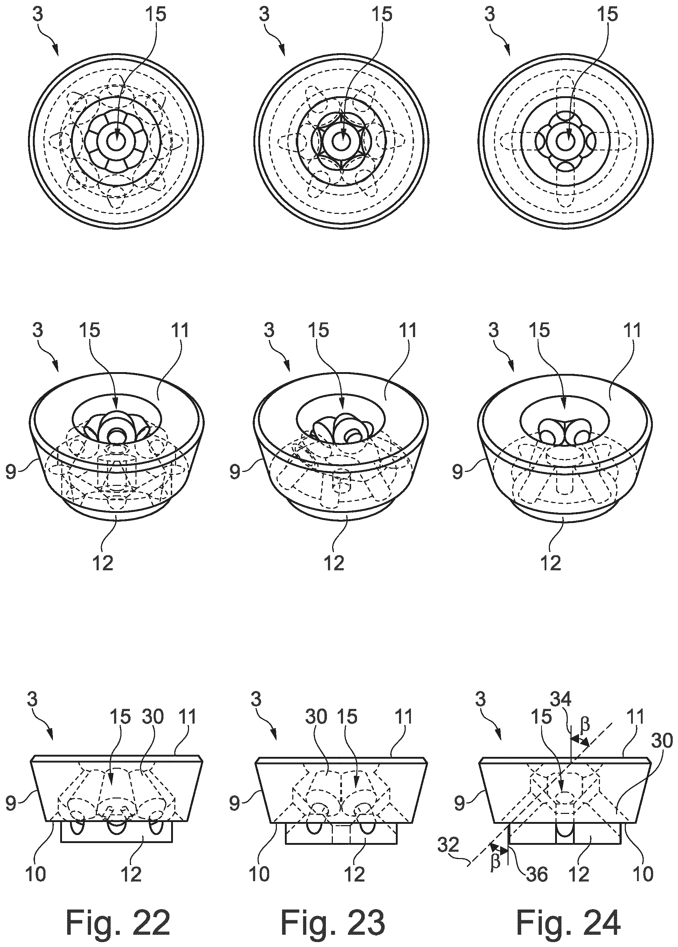

**Figur 22** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 22 zeigt einen Verbinderzapfen mit neunfacher Verschraubung. Dies vermeidet vorteilhaft eine faserparallele Verschraubung.

Die Ausführungsform gemäß Figur 22 unterscheidet sich von der Ausführungsform gemäß Figur 16 dadurch, dass gemäß Figur 22 eine Mehrzahl von Einführlöchern 30 durch den Zapfen 3 vorgesehen sind, die relativ zueinander unterschiedliche Erstreckungsrichtungen aufweisen und daher miteinander jeweils einen von 0° und von 90° verschiedenen Winkel einschließen. Insbesondere können mindestens zwei, vorzugsweise mindestens drei Einführlöcher 30, vorgesehen sein, wobei jedes Paar von zwei Einführlöchern 30 zueinander schräge Erstreckungsrichtungen aufweist. Ein Winkel zwischen Erstreckungsrichtungen von zwei Einführlöchern 30 kann für jedes Paar von zwei Einführlöchern 30 in einem Bereich von 10° bis 80° liegen, insbesondere in einem Bereich von 20° bis 70° oder von 30° bis 60°. In jedes Einführloch 30 kann ein Befestigungselement, wie beispielsweise eine Schraube, ein Nagel oder ein Stift, durchgeführt werden, um die Befestigung des Zapfens 3 an einem ersten Holzbauteil 1 zu bewerkstelligen. Die Gefahr eines unerwünschten Ausziehens des Zapfens 3 aus dem ersten Holzbauteil 1 kann durch mehrere

Befestigungselemente in mehreren zueinander schräg orientierten Durchganglöchern 30 signifikant reduziert werden. Die Ausführungsform gemäß Figur 22 hat mehrere zueinander geneigte Befestigungsschrauben, was die Zugkraft erhöht.

Beispielsweise können die relativ zueinander schräg gestellten Schrauben oder sonstigen Befestigungselemente und in entsprechender Weise die Einführlöcher 30 selbst kreisförmig angeordnet sein, wie in Figur 22 dargestellt.

Bei dem Ausführungsbeispiel gemäß Figur 22 kann der Zapfen 3 beispielsweise auf Basis einer Kunstharzplatte gefertigt werden.

**Figur 23** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 23 zeigt einen Verbinderzapfen mit siebenfacher Verbindung (sechsfache Schrägverschraubung und mittige 90°-Fixierschraube). Dies vermeidet vorteilhaft eine faserparallele Verschraubung.

Die Ausführungsform gemäß Figur 23 unterscheidet sich von der Ausführungsform gemäß Figur 22 dadurch, dass gemäß Figur 23 die relativ zueinander schräg orientierten Einführlöcher 30 in anderer Weise als gemäß Figur 22 angeordnet sind. Gemäß Figur 23 ist eine Innen-Mehrfachverschraubung aus kreisförmig angeordneten Einführlöchern 30 und zugehörigen Befestigungselementen realisiert.

Die kreisförmige Anordnung der Schraubkanäle und Schrauben gemäß Figur 23 hat die Funktion der Erhöhung der Zugschertragfähigkeit zwischen Verbinderzapfen und Einschraubuntergrund.

**Figur 24** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 24 zeigt einen Verbinderzapfen mit fünffacher Verbindung (vierfache Schrägverschraubung und mittige 90°-Fixierschraube, die auch erreicht werden kann, wenn die Schrägschrauben schon gesetzt sind). Dies vermeidet vorteilhaft eine faserparallele Verschraubung.

Die Ausführungsform gemäß Figur 24 unterscheidet sich von den Ausführungsformen gemäß Figuren 22 und 23 dadurch, dass gemäß Figur 24 die relativ zueinander schräg orientierten Einführlöcher 30 in anderer Weise als gemäß Figuren 22, 23 angeordnet sind. Gemäß Figur 24 ist eine mittig angeordnete Fixierschaube vorgesehen. Es erfolgt eine zentrale Setzung der Schraube in einem Winkel von 90°. Figur 24 erfüllt die Funktion einer Erstfixierung des Verbinderzapfens 3. weitere Schraubenverbindungen können folgen.

**Figur 25** zeigt einen Zapfen 3 für eine Wand-, Decken-, Fassaden- oder Dachelementverbindung gemäß einem anderen exemplarischen Ausführungsbeispiel der Erfindung in einer Draufsicht. Figur 25 zeigt einen Verbinderzapfen mit schildförmiger Geometrie. Mit diesem kann eine Spitze zur Zentrierung mit sehr langen Seitenkanten kombiniert werden.

Die Ausführungsform gemäß Figur 25 unterscheidet sich von der Ausführungsform gemäß Figur 2 insbesondere dadurch, dass gemäß Figur 25 der Zapfen 3 in einer Draufsicht schildförmig ist. Somit laufen gemäß Figur 25 die geneigten Seitenflächen 9, 9 in gekrümmter Weise aufeinander zu und vereinigen sich an einer spitzen Kante an der vorderen Endfläche 7.

**Figur 26** zeigt einen Zapfen 3 für eine Wand-, Decken-, Fassaden- oder Dachelementverbindung gemäß einem anderen exemplarischen Ausführungsbeispiel der Erfindung in einer Draufsicht. Die Dreiecksform gemäß Figur 26 stellt eine Zentrierform mit einer sehr geringen Zapfenhöhe bereit, da vorderseitig ein stumpfer Winkel vorgesehen ist.

Die Ausführungsform gemäß Figur 26 unterscheidet sich von der Ausführungsform gemäß Figur 25 insbesondere dadurch, dass gemäß Figur 26 der Zapfen 3 in einer Draufsicht dreieckig ist. Somit laufen gemäß Figur 26 die geneigten Seitenflächen 9 geradlinig aufeinander zu und treffen sich an einer spitzen Kante an der vorderen Endfläche 7. Somit ist gemäß Figur 26 ein dreieckiger Verbinderzapfen 3 gebildet. Ein solcher Verbinderzapfen 3 mit dreieckiger zentrierender Einfädelungsfläche erfüllt die Funktion, dass aufgrund der spitzen Einfädelungsfläche eine kleinere Einfädelungstasche im zweiten Holzbauteil 2 ausreichend ist.

**Figur 27** zeigt einen Zapfen 3 für eine Wand-, Decken-, Fassaden- oder Dachelementverbindung gemäß einem anderen exemplarischen Ausführungsbeispiel der Erfindung in einer Draufsicht. Figur 27 zeigt einen im Wesentlichen T-förmigen Verbinderzapfen. Bei diesem sorgt eine lange Spitze für eine langsame Zentrierung. Horizontale Flächen bewirken einen Zusammenzieheffekt und eine vertikale Kraftübertragung. Eine vertikale kurze Fläche fungiert zur Verringerung der Verdrehung.

Die Ausführungsform gemäß Figur 27 unterscheidet sich von der Ausführungsform gemäß Figur 26 insbesondere dadurch, dass gemäß Figur 27 der Zapfen 3 in einer Draufsicht einen dreieckigen Abschnitt 50 (beispielsweise ähnlich wie in Figur 26) und zusätzlich einen sich daran anschließenden rückseitigen aufgeweiteten, zum Beispiel rechteckigen Abschnitt 52 aufweist. Anschaulich kann gemäß Figur 27 ein im Wesentlichen T-förmiger Verbinderzapfen 3 mit Zentrierspitze bereitgestellt werden. Ein solcher Verbinderzapfen 3 mit horizontalen Kontaktflächen und zentrierender Einfädelungsfläche erfüllt die Funktion einer Kraftübertragung durch horizontale Kontaktflächen und spitzer Einfädelungsfläche zum Erzielen einer hohen Kraftübertragung und einer kleinen Einfädelungstasche im zweiten Holzbauteil 2. Die Ausführungsform gemäß Figur 27 zeigt einen schmalen und langen dreieckigen Abschnitt 50, an den ein flächenvergrößernder Abschnitt 52 angeschlossen ist.

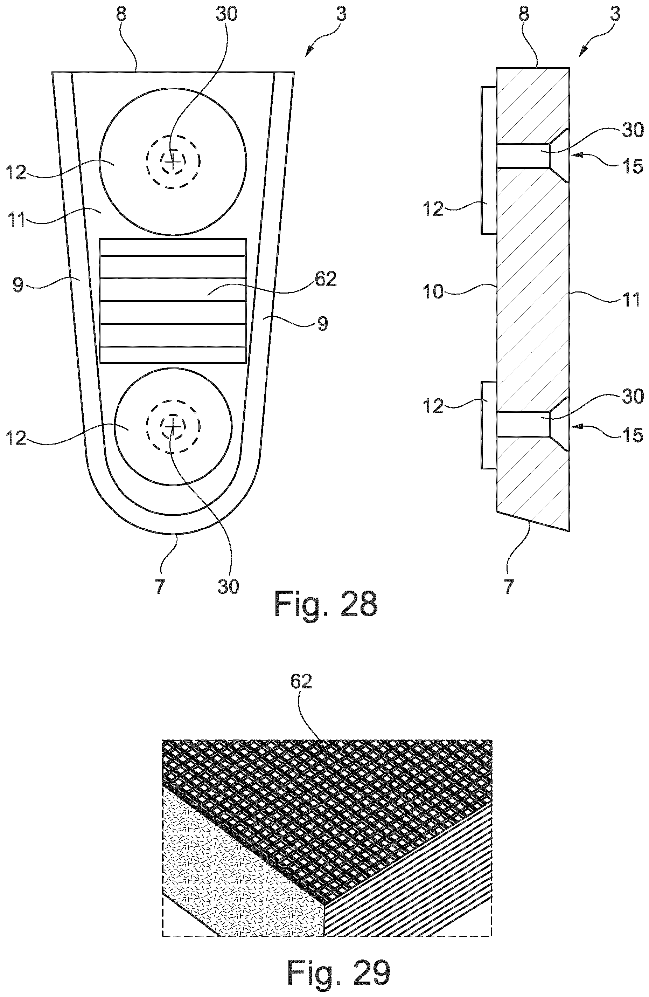

**Figur 28** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Draufsicht und einer Seitenansicht, wobei der Zapfen 3 eine Reibungserhöhungsstruktur 62 aufweist. **Figur 29** zeigt ein Beispiel für eine solche Reibungserhöhungsstruktur 62 für den Zapfen 3 gemäß einem exemplarischen Ausführungsbeispiel der Erfindung. Figur 28 zeigt einen Verbinderzapfen mit innen liegender Reibungsfläche (vergleiche auch Figur 29) und lösbarer Verbindung. Beispielsweise kann die Reibfläche (d.h. die unten beschriebene Reibungserhöhungsstruktur 62) eingefräst sein oder durch einen Zusatz (beispielsweise eine Metallplatte) aufgetragen sein.

Die Ausführungsform gemäß Figur 28 und Figur 29 unterscheidet sich von der Ausführungsform gemäß Figur 2 insbesondere dadurch, dass gemäß Figur 28 der Zapfen 3 an der Anschlussfläche 10 und/oder an der Stirnfläche 11 die besagte Reibungserhöhungsstruktur 62 aufweist. Die Reibungserhöhungsstruktur 62 kann eine physische Struktur sein, die einen lokal erhöhten Reibungskoeffizienten im Vergleich zu ihrer Umgebung aufweist. Zum Beispiel kann die Reibungserhöhungsstruktur 62 eine Reibplatte sein. Dadurch liegt der Zapfen 3 mit einer höheren Haftreibung an dem ersten Holzbauteil 1 und/oder an dem zweiten Holzbauteil 2 an. Die durch die Reibungserhöhungsstruktur 62 vergrößerte Haftreibung zwischen dem Zapfen 3, dem ersten Holzbauteil 1 bzw. dem zweiten Holzbauteil 2 kann eine unerwünschte Verschiebung besagter Konstituenten relativ zueinander erschweren. Eine relative Verschiebung zueinander erfolgt somit erst bei - im Vergleich zu einer Holzverbindung ohne Reibungserhöhungsstruktur 62 - erhöhten Traglasten. Durch die Reibplatte oder eine andere Reibungserhöhungsstruktur 62 kann die Rauigkeit der jeweiligen Anschlusspaarflächen erhöht werden.

Durch das Vorsehen mindestens einer Reibungserhöhungsstruktur 62 am Zapfen 3 kann mittels Reibung die Schertragfähigkeit erhöht werden. Eine solche Reibungserhöhungsstruktur 62 kann erhalten werden, wenn an der Verbinderseite plan abgefräst wird. Beispielsweise kann die Innenfläche statt plan auch mit einer Pyramidenstruktur oder einer horizontalen Dreiecksline ausgestaltet werden.

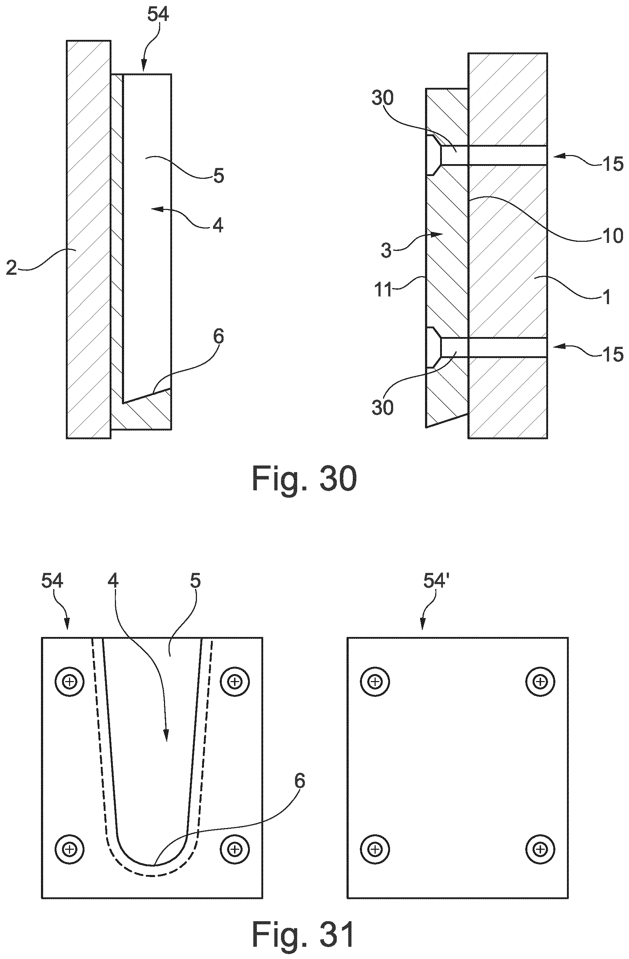

**Figur 30** zeigt ein an einem zweiten Holzbauteil 2 angebrachtes Adapterteil 54 für eine Wand-, Decken-, Fassaden- oder Dachelementverbindung gemäß einem anderen exemplarischen Ausführungsbeispiel der Erfindung in einer Seitenansicht. Ferner zeigt Figur 30 einen an einem ersten Holzbauteil 1 angebrachten Zapfen 3 für das Adapterteil 54 in einer Seitenansicht. Zur Verbindung kann der Zapfen 3 in die Tasche oder Nut 4 des Adapterteils 54 eingeführt werden. Durch das separate Vorsehen des Adapterteils 54 von der Holzkomponente des zweiten Holzbauteils 2 ist es auch möglich, das Adapterteil 54 aus einem von dem restlichen zweiten Holzbauteil 2 und/oder von dem Zapfen 3 unterschiedlichen Material zu fertigen, beispielsweise aus Metall und/oder Kunststoff.

**Figur 31** zeigt in einer Draufsicht das Adapterteil 54 gemäß Figur 30 und eine optionale Distanzplatte 54' zum optionalen Anordnen zwischen dem Adapterteil 54 und dem restlichen zweiten Holzbauteil 2 gemäß einem exemplarischen Ausführungsbeispiel der Erfindung. Das Adapterteil 54 kann auch als Gegenplatte bezeichnet werden. Gemäß Figur 31 ist es möglich, das Adapterteil 54 direkt oder indirekt über die weitere Distanzplatte 54' beispielsweise über eine lösbare oder gesteckte Verbindung an dem restlichen zweiten Holzbauteil 2 zu befestigen.

**Figur 32** zeigt einen Zapfen 3 für eine Wand-, Decken-, Fassaden- oder Dachelementverbindung gemäß einem exemplarischen Ausführungsbeispiel der Erfindung in einer Querschnittsansicht. Die Konstruktion des Zapfens 3 kann jener gemäß Figur 16 entsprechen, wobei gemäß Figur 32 der Zapfen 3 in ein erstes Holzbauteil 1 eingesetzt ist. Es sind verschiedenste Materialkombinationen möglich. Beispielsweise kann der Zapfen 3 Holz, einen Holzwerkstoff, ein Metall, Metallguss und/oder ein Kunstharz aufweisen. Die Erhebung 12 kann beispielsweise aus einem Metall und/oder einem Kunstharz gefertigt sein. Das erste Holzbauteil 1 kann Holz oder einen Holzwerkstoff aufweisen, insbesondere versehen mit Kunstharz (beispielsweise bei einer Ausführungsform mit Furnierschichtholz). Es ist möglich, dass Zapfen 3 und Erhebung 12 aus verschiedenen Materialien oder aus gleichen Materialien hergestellt sind. In beiden Fällen können Materialien von Zapfen 3 oder Erhebung 12 gegenüber Materialien des ersten Holzbauteils 1 verschieden oder gleich sein. Zur Erhöhung der Tragfähigkeit oder Druckfestigkeit kann die auch als Anschlusszapfen bezeichnete Erhebung 12 aus einem anderen Material als der auch als Verbinderzapfen bezeichnete Zapfen 3 gefertigt sein. Der Verbinder aus Zapfen 3 und Erhebung 12 kann einteilig oder zweiteilig ausgeführt sein.

**Figur 33** zeigt eine Draufsicht eines Zapfens 3 mit einer Vielzahl von Erhebungen 12 an einer Anschlussfläche 10. Somit ist es möglich, auch mehr als zwei Erhebungen 12 an einem Zapfen 3 vorzusehen. Die mehreren Erhebungen 12 können sich auch in unterschiedlichen Richtungen erstrecken, beispielsweise längs und quer erhaben über der Anschlussfläche 10 überstehen. Gemäß Figur 33 erstreckt sich eine erste Mehrzahl von Erhebungen 12 entlang einer Einführrichtung in eine Tasche oder Nut 4 eines zweiten Holzbauteils 2. Zusätzlich erstreckt sich eine zweite Mehrzahl von Erhebungen 12 quer zu der Einführrichtung in eine Tasche oder Nut 4.

Figuren 34 und 35 zeigen unterschiedliche Konfigurationen eines Zapfens 3 mit Erhebung 12 in einem zugehörigen Positionierungsloch in Form einer Vertiefung 13 eines ersten Holzbauteils 1 gemäß exemplarischen Ausführungsbeispielen der Erfindung. Figur 36 zeigt einen Zapfen 3 ohne Erhebung 12, dessen Endabschnitt 12' gemäß einem exemplarischen Ausführungsbeispiel der Erfindung direkt in ein Positionierungsloch in Form einer Vertiefung 13 eines ersten Holzbauteils 1 eingeführt ist.

Gemäß **Figur 34** ist die Erhebung 12 gegenüber dem Zapfen 3 quer zu einer Einführrichtung in das erste Holzbauteil 1 verkleinert. Am Übergang zum ersten Holzbauteil 1 ist der Zapfen 3 samt Erhebung 12 somit abgestuft. Die Anschlussfläche 10 des Zapfens 3 kann an einer Außenfläche des ersten Holzbauteils 1 anliegen. Die Erhebung 12 ist also gegenüber dem Zapfen 3 seitlich verkleinert und ist ohne Zapfen 3 in die Vertiefung 13 des ersten Holzbauteils 1 eingesetzt.

Gemäß **Figur 35** erstreckt sich die Erhebung 12 über eine gesamte Zapfenfläche am Übergang zwischen Zapfen 3 und Erhebung 12. An einem Übergang zwischen Zapfen 3 und Erhebung 12 ist nur eine Kante, nicht aber eine Stufe gebildet.

Gemäß **Figur 36** ist ein Endabschnitt 12' eines Zapfens 3 mit geneigten Seitenflächen 9 in eine Vertiefung 13 des ersten Holzbauteils 1 eingeführt. Eine separate Erhebung 12 ist gemäß Figur 36 nicht vorgesehen. Vielmehr wird der Endabschnitt 12' des Zapfens 3 als Ganzes in die Vertiefung 13 des ersten Holzbauteils 1 eingesetzt. An einem Übergang zwischen einem Äußeren des ersten Holzbauteils 1 und seiner Vertiefung 13 ist am Zapfen 3 weder eine Kante noch eine Stufe gebildet. Während in Figur 36 die Seitenflächen der Vertiefung 13 entsprechend der Seitenflächen 9 des Zapfens 3 geneigt sind, ist es alternativ möglich, dass die Vertiefung 13 senkrechte Seitenflächen aufweist (nicht gezeigt).

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Anordnung für eine Wand-, Decken-, Fassaden- oder Dachelementverbindung zur Verbindung stab-, balken- oder plattenförmiger Holzbauteile (1, 2), aufweisend:
einen Zapfen (3) mit mindestens einem Einführloch (30); und
eine lösbare Verbindung (15), die lösbar durch das mindestens eine Einführloch (30) des Zapfens (3) hindurchführbar und in ein erstes Holzbauteil (1) einführbar ist;
wobei der Zapfen (3) ausgebildet ist, mittels der lösbaren Verbindung (15) an einer Anschlussfläche (10) an dem ersten Holzbauteil (1) befestigt zu werden;
wobei der Zapfen (3) mit einer sich von der Anschlussfläche (10) in Richtung einer gegenüberliegenden Stirnfläche (11) zum Anschluss an ein zweites Holzbauteil (2) erweiternden Außenkontur ausgebildet ist;
wobei der Zapfen (3) zur Einführung in einen Einführungsbereich (5) einer am zweiten Holzbauteil (2) angeordneten Tasche oder Nut (4) ausgebildet ist; und
wobei der Zapfen (3) zur Halterung in einem Haltebereich (6) der Tasche oder Nut (4) mit einer an die Außenkontur des Zapfens (3) angepassten, sich nach innen erweiternden Innenkontur ausgebildet ist.

2. Anordnung gemäß Anspruch 1, des Weiteren mit zumindest einem der folgenden Merkmale:
wobei an der Anschlussfläche (10) des Zapfens (3) mindestens eine Erhebung (12) zum formschlüssigen Eingriff in mindestens eine entsprechende Vertiefung (13) am ersten Holzbauteil (1) vorgesehen ist, wobei die mindestens eine Erhebung (12) vorzugsweise rund, insbesondere kreisförmig, oder polygonal, insbesondere rechteckförmig, ist, und wobei die mindestens eine polygonale Erhebung (12) vorzugsweise abgerundete Ecken aufweist, und wobei sich das mindestens eine Einführloch (30) vorzugsweise schräg durch die mindestens eine Erhebung (12) hindurch erstreckt;
wobei das mindestens eine Einführloch (30) in dem Zapfen (3) senkrecht zu der Anschlussfläche (10) und/oder senkrecht zu der Stirnfläche (11) verläuft;
wobei der Zapfen (3) in einer Querschnittsansicht trapezförmig ist;
wobei das mindestens eine Einführloch (30) des Zapfens (3) eine, insbesondere kegelstumpfförmige oder kreiszylindrische, Aufnahme (48) für einen Schraubenkopf aufweist;
wobei der Zapfen (3) in einer Draufsicht schildförmig ist;
wobei der Zapfen (3) an der Anschlussfläche (10) und/oder an der Stirnfläche (11) eine Reibungserhöhungsstruktur (62) aufweist.

3. Anordnung gemäß Anspruch 1 oder 2, wobei an der Anschlussfläche (10) des Zapfens (3) mindestens zwei Erhebungen (12), beispielsweise mehr als zwei Erhebungen (12), zum formschlüssigen Eingriff in mindestens zwei entsprechende Vertiefungen (13) am ersten Holzbauteil (1) vorgesehen sind, wobei die mindestens zwei Erhebungen (12) vorzugsweise an der Anschlussfläche (10) gleich große Flächen oder unterschiedlich große Flächen aufweisen.

4. Anordnung gemäß einem der Ansprüche 1 bis 3, wobei das mindestens eine Einführloch (30) in dem Zapfen (3) schräg zu der Anschlussfläche (10) und/oder schräg zu der Stirnfläche (11) verläuft, wobei vorzugsweise ein Winkel (β) zwischen einer Verlaufsrichtung (32) des mindestens einen Einführlochs (30) in dem Zapfen (3) einerseits und einer Normalen (36) der Anschlussfläche (10) und/oder einer Normalen (34) der Stirnfläche (11) andererseits in einem Bereich von 15° bis 75°, insbesondere in einem Bereich von 30° bis 60°, liegt, und wobei vorzugsweise eine Mehrzahl von Einführlöchern (30) in dem Zapfen (3) schräg zueinander und/oder schräg zu der Anschlussfläche (10) und/oder schräg zu der Stirnfläche (11) verlaufen.

5. Anordnung gemäß einem der Ansprüche 1 bis 4, wobei der Zapfen (3) in einer Querschnittsansicht zueinander geneigte Seitenflächen (9) aufweist, die über Rundungen (38) in die Stirnfläche (11) übergehen.

6. Anordnung gemäß einem der Ansprüche 1 bis 5, wobei der Zapfen (3) in einer Querschnittsansicht zueinander geneigte und jeweils abknickende Seitenflächen (9) aufweist, die, insbesondere über eine Kante (40), in die Stirnfläche (11) übergehen.

7. Anordnung gemäß einem der Ansprüche 1 bis 6, wobei der Zapfen (3) in einer Querschnittsansicht zueinander geneigte und Stufen (44) aufweisende Seitenflächen (9) aufweist oder doppeltrapezförmig ist.

8. Anordnung gemäß einem der Ansprüche 1 bis 7, wobei der Zapfen (3) in einer Draufsicht dreieckig ist oder einen dreieckigen Abschnitt (50) und einen sich daran anschließenden rechteckigen Abschnitt (52) aufweist.

9. Wand-, Decken-, Fassaden- oder Dachelementverbindung, aufweisend:
eine Anordnung gemäß einem der Ansprüche 1 bis 8;
ein erstes Holzbauteil (1), an dem die Anschlussfläche (10) des Zapfens (3) mittels der lösbaren Verbindung (15) befestigt oder befestigbar ist;
ein zweites Holzbauteil (2), an das der Zapfen (3) angeschlossen oder anschließbar ist, so dass das zweite Holzbauteil (2) der Stirnfläche (11) des Zapfens (3) zugewandt ist, wobei das zweite Holzbauteil (2) eine Tasche oder Nut (4) mit einem Einführungsbereich (5) zum Einführen des Zapfens (3) und einem Haltebereich (6) zum Haltern des Zapfens (3) aufweist, wobei der Haltebereich (6) mit einer an die Außenkontur des Zapfens (3) angepassten, sich nach innen erweiternden Innenkontur ausgebildet ist.

10. Wand-, Decken-, Fassaden- oder Dachelementverbindung gemäß Anspruch 9, des Weiteren mit zumindest einem der folgenden Merkmale:
wobei das erste Holzbauteil (1) mindestens zwei Vertiefungen (13) aufweist, in die mindestens zwei Erhebungen (12) an der Anschlussfläche (10) des Zapfens (3) formschlüssig eingreifen;
wobei die Tasche oder Nut (4) eine unebene Bodenfläche (18) aufweist, insbesondere eine Bodenfläche (18) mit zwei zueinander geneigten ebenen Bodenflächenabschnitten (58, 60), wobei die Tasche oder Nut (4) vorzugsweise einander gegenüberliegende und relativ zueinander geneigte Seitenflächen (9) aufweist, die in die unebene Bodenfläche (18) münden;
wobei das erste Holzbauteil (1) und/oder das zweite Holzbauteil (2) an einem dem Zapfen (3) zugewandten Oberflächenabschnitt eine Reibungserhöhungsstruktur (62) aufweist;
wobei das zweite Holzbauteil (2) seitlich von der Tasche oder Nut (4) einen Verstärkungskragen (42) aufweist;
wobei das zweite Holzbauteil (2) in der Tasche oder Nut (4) eine Klebstoffstruktur (46) aufweist;
wobei die Tasche oder Nut (4) in einer Querschnittsansicht trapezförmig ist;
wobei die Tasche oder Nut (4) in einer Querschnittsansicht zueinander geneigte innere Seitenflächen (16) aufweist, die über Rundungen (38) in eine Bodenfläche (18) übergehen;
wobei die Tasche oder Nut (4) in einer Querschnittsansicht zueinander geneigte und jeweils abknickende innere Seitenflächen (16) aufweist, die, insbesondere über eine Kante (84), in eine Bodenfläche (18) übergehen;
wobei die mindestens eine Erhebung (12) gemäß Anspruch 2 gegenüber dem Zapfen (3) quer zu einer Einführrichtung in das erste Holzbauteil (1) verkleinert ist;
wobei sich die mindestens eine Erhebung (12) gemäß Anspruch 2 zumindest abschnittsweise über eine gesamte Zapfenfläche am Übergang zwischen Zapfen (3) und Erhebung (12) erstreckt;
wobei ein Endabschnitt des Zapfens (3), beispielsweise eines Zapfens (3) mit geneigten Seitenflächen (9), ohne zusätzliche Erhebung (12) direkt in eine Vertiefung (13) des ersten Holzbauteils (1) eingeführt ist.

11. Wand-, Decken-, Fassaden- oder Dachelementverbindung gemäß Anspruch 9 oder 10, wobei die Tasche oder Nut (4) unmittelbar in dem zweiten Holzbauteil (2) gebildet ist, insbesondere ausschließlich durch eine Holzfläche des zweiten Holzbauteils (2) begrenzt ist.

12. Wand-, Decken-, Fassaden- oder Dachelementverbindung gemäß Anspruch 9 oder 10, aufweisend zumindest eines der folgenden Merkmale:
wobei das zweite Holzbauteil (2) ein daran montiertes Adapterteil (54) aufweist, das zumindest teilweise die Tasche oder Nut (4) mit dem Einführungsbereich (5) und dem Haltebereich (6) begrenzt;
wobei das zweite Holzbauteil (2) eine Ausnehmung aufweist, in die ein Adapterteil (54), insbesondere eine Adapterplatte und/oder gebildet aus Metall oder Kunststoff, eingesetzt ist, wobei das Adapterteil (54) zumindest teilweise die Tasche oder Nut (4) mit dem Einführungsbereich (5) und dem Haltebereich (6) begrenzt.

13. Wand-, Decken-, Fassaden- oder Dachelementverbindung gemäß Anspruch 12, wobei das Adapterteil (54) eine oder mehrere Einführlöcher (56) zum Durchführen von einem oder mehreren Befestigungselementen zum Befestigen des Adapterteils (54) an dem zweiten Holzbauteil (2) aufweist.

14. Wand-, Decken-, Fassaden- oder Dachelementverbindung gemäß Anspruch 12 oder 13, wobei das Adapterteil (54) mittels einer Klebebefestigung an dem zweiten Holzbauteil (2) befestigt ist.

15. Wand-, Decken-, Fassaden- oder Dachelementverbindung gemäß einem der Ansprüche 9 bis 14, wobei die Tasche oder Nut (4) in einer Querschnittsansicht zueinander geneigte und Stufen (44) aufweisende innere Seitenflächen (16) aufweist; und/oder doppeltrapezförmig ist.
